# EUROPEAN PATENT APPLICATION

(11) **EP 4 516 543 A1**
(43) Date of publication of application: **05.03.2025**
(21) Application number: 23795607.3
(22) Date of filing: 28.04.2023
(51) Int. Cl.: B60H 1/14, B60H 1/00, B60H 1/32, H01M 10/615, H01M 10/625, H01M 10/663, B60K 11/02, B60L 58/26, B60L 58/27

(54) **VEHICLE AIR CONDITIONING SYSTEM, HEAT MANAGEMENT SYSTEM AND CONTROL METHOD THEREFOR, AND VEHICLE**

(30) Priority: 29.04.2022 CN 202210475920; 31.05.2022 CN 202221344891 U; 31.05.2022 CN 202221362489 U
(71) Applicant: BYD Company Limited, Shenzhen, Guangdong 518118 (CN)
(72) Inventor: LIAN, Yubo, Shenzhen, Guangdong 518118 (CN); LING, Heping, Shenzhen, Guangdong 518118 (CN); HUANG, Wei, Shenzhen, Guangdong 518118 (CN); ZHAI, Zhen, Shenzhen, Guangdong 518118 (CN); SONG, Gan, Shenzhen, Guangdong 518118 (CN)
(74) Representative: Mathys & Squire
(86) International application number: PCT/CN2023/091486
(87) International publication number: WO 2023/208175

(57) **Abstract**

A vehicle air conditioning system, a heat management system (1) and a control method therefor, and a vehicle (5). The heat management system (1) comprises: one or more heat exchange loops (2), each heat exchange loop (2) comprising a heat pump device (21), a heat absorption heat exchanger (22) and a heat supply heat exchanger (23) which are sequentially connected in series, when there are a plurality of heat exchange loops (2), the plurality of heat exchange loops (2) sharing the heat pump device (21), the heat absorption heat exchanger (22) comprising at least one of an in-vehicle heat exchanger (221) and a battery pack heat exchanger (222), and the heat exchange loops (2) being used for implementing in-vehicle warming or battery pack heating; and a valve assembly (3), used for implementing on/off of each heat exchange loop (2), wherein when the heat absorption heat exchanger (22) is the in-vehicle heat exchanger (221), the heat supply heat exchanger (23) comprises at least one of the battery pack heat exchanger (222), an out-vehicle heat exchanger (223), and a motor electric control assembly heat exchanger (224); when the heat absorption heat exchanger (22) is the battery pack heat exchanger (222), the heat supply heat exchanger (23) comprises at least one of the out-vehicle heat exchanger (223) and the motor electric control assembly heat exchanger (224).

## Description

### CROSS-REFERENCE TO RELATED APPLICATIONS

The present disclosure claims priority to and benefits of Chinese Patent Application Nos. 2022104759203, filed on April 29, 2022, and entitled "HEAT MANAGEMENT SYSTEM AND CONTROL METHOD THEREFOR AND VEHICLE", and 202221344891.9, entitled "VEHICLE AIR CONDITIONING SYSTEM, VEHICLE HEAT MANAGEMENT SYSTEM, AND VEHICLE", and 202221362489.3, entitled "VEHICLE AIR CONDITIONING SYSTEM, VEHICLE HEAT MANAGEMENT SYSTEM, AND VEHICLE", both filed on May 31, 2022. The entire content of the above-referenced applications is incorporated herein by reference.

### FIELD

The present disclosure relates to the field of vehicle technologies, and specifically, to a vehicle air conditioning system, a heat management system and a control method therefor, and a vehicle.

### BACKGROUND

To implement heat supply to a passenger compartment of a vehicle, electrical heating is configured in one solution. The solution has a high heating rate, but requires high power consumption, affecting the mileage of the vehicle, and requires increased costs, which is not conducive to the promotion of the vehicle. A heat pump system is used in another solution. In the solution, heat in an environment is absorbed to implement heat supply, so that the power consumption for heating can be reduced, and the mileage of the vehicle at a low temperature is increased. However, in an environment with a low temperature, the heating effect is significantly reduced.

### SUMMARY

The present disclosure provides a vehicle air conditioning system, a heat management system and a control method therefor, and a vehicle.

In a first aspect, embodiments of the present disclosure provide a vehicle air conditioning system, including: a first passenger compartment heating loop and a first battery pack heat exchange loop. The first passenger compartment heating loop and the first battery pack heat exchange loop share a compressor and an out-vehicle condenser. The first passenger compartment heating loop further includes an in-vehicle condenser. The first battery pack heat exchange loop further includes a heat conducting component connected to a power battery. The power battery is connected to a self-heating circuit used for self-heating the power battery. An outlet of the compressor is in communication with an inlet of the in-vehicle condenser. An outlet of the in-vehicle condenser is in communication with an inlet of the out-vehicle condenser. An outlet of the out-vehicle condenser is in communication with an inlet of the compressor.

In a second aspect, embodiments of the present disclosure provide a heat management system, including a power battery, a self-heating circuit, and the vehicle air conditioning system in the embodiments of the first aspect.

In a third aspect, embodiments of the present disclosure provide another heat management system. The system includes: one or more heat exchange loops, each heat exchange loop including a heat pump device, a heat absorption heat exchanger and a heat supply heat exchanger which are sequentially connected in series, when there are multiple heat exchange loops, the multiple heat exchange loops sharing the heat pump device, the heat absorption heat exchanger including at least one of an in-vehicle heat exchanger and a battery pack heat exchanger, and the heat exchange loops being used for implementing in-vehicle warming or battery pack heating; and a valve assembly, configured to implement on/off of each heat exchange loop. When the heat absorption heat exchanger is the in-vehicle heat exchanger, the heat supply heat exchanger includes at least one of the battery pack heat exchanger, an out-vehicle heat exchanger, and a motor electric control assembly heat exchanger. When the heat absorption heat exchanger is the battery pack heat exchanger, the heat supply heat exchanger includes at least one of the out-vehicle heat exchanger and the motor electric control assembly heat exchanger.

In a fourth aspect, embodiments of the present disclosure provide a control method for a heat management system. The method is used for the heat management system provided in the embodiments of the third aspect of the present disclosure. The method includes: receiving a heat management instruction; and controlling the heat management system according to the heat management instruction to implement in-vehicle warming and/or battery pack heating.

In a fifth aspect, embodiments of the present disclosure provide a vehicle. The vehicle includes the heat management systems provided in the embodiments of the second aspect and the third aspect of the present disclosure.

According to the vehicle air conditioning system, the heat management system and the control method therefor, and the vehicle in the embodiments of the present disclosure, in the heat management system, the heat absorption heat exchanger and the heat supply heat exchanger are arranged on the heat exchange loop to enable the heat management system to perform heat exchange without another heating source, so as to improve energy utilization at a low temperature, thereby reducing energy consumption, and in addition reduce an occupation space of the system, thereby reducing the implementation costs.

### BRIEF DESCRIPTION OF THE DRAWINGS

FIG. 1 is a schematic diagram of a vehicle air conditioning system according to an embodiment of the present disclosure;
FIG. 2 is a schematic diagram of a vehicle heat management system according to an embodiment of the present disclosure;
FIG. 3 is a partial enlarged view of A in FIG. 2;
FIG. 4 is a partial enlarged view of B in FIG. 2;
FIG. 5 is a schematic diagram of a first passenger compartment heating loop according to an embodiment of the present disclosure;
FIG. 6 is a schematic diagram of a first battery pack heat exchange loop according to an embodiment of the present disclosure;
FIG. 7 is a schematic diagram of a battery pack temperature reduction loop according to an embodiment of the present disclosure;
FIG. 8 is a schematic diagram of a passenger compartment refrigeration loop according to an embodiment of the present disclosure;
FIG. 9 is a schematic diagram of a vehicle heat management system according to another embodiment of the present disclosure;
FIG. 10 is a schematic diagram of a second passenger compartment heating loop according to an embodiment of the present disclosure;
FIG. 11 is a schematic diagram of a second battery pack heat exchange loop according to an embodiment of the present disclosure;
FIG. 12 is a schematic diagram of a vehicle heat management system according to an embodiment of the present disclosure;
FIG. 13 is a schematic diagram of a vehicle heat management system according to another embodiment of the present disclosure;
FIG. 14 is a schematic diagram of a first passenger compartment heating loop according to an embodiment of the present disclosure;
FIG. 15 is a schematic diagram of a second passenger compartment heating loop according to an embodiment of the present disclosure;
FIG. 16 is a schematic diagram of a passenger compartment refrigeration loop according to an embodiment of the present disclosure;
FIG. 17 is a schematic diagram of a vehicle heat management system according to another embodiment of the present disclosure;
FIG. 18 is a schematic diagram of a third passenger compartment heating loop according to still another embodiment of the present disclosure;
FIG. 19 is a schematic structural diagram of a heat management system with one heat exchange loop according to an embodiment of the present disclosure;
FIG. 20 is a schematic structural diagram of a heat management system with multiple heat exchange loops according to an embodiment of the present disclosure;
FIG. 21 is a schematic structural diagram of a heat management system according to an example of the present disclosure;
FIG. 22 is a partial schematic structural diagram of a heat management system according to a specific embodiment of the present disclosure;
FIG. 23 is a partial schematic structural diagram of a heat management system according to a specific embodiment of the present disclosure;
FIG. 24 is a partial schematic structural diagram of a heat management system according to a specific embodiment of the present disclosure;
FIG. 25 is a partial schematic structural diagram of a heat management system according to a specific embodiment of the present disclosure;
FIG. 26 is a partial schematic structural diagram of a heat management system according to a specific embodiment of the present disclosure;
FIG. 27 is a schematic structural diagram of a heat management system according to a specific embodiment of the present disclosure;
FIG. 28 is a schematic structural diagram of a battery pack heat exchanger according to an example of the present disclosure;
FIG. 29 is a schematic structural diagram of a battery pack heat exchanger according to another example of the present disclosure;
FIG. 30 is a schematic structural diagram of a heat management system according to another embodiment of the present disclosure;
FIG. 31 is a schematic structural diagram of a battery pack self-heating device according to an example of the present disclosure;
FIG. 32 is a flowchart of a control method for a heat management system according to an embodiment of the present disclosure;
FIG. 33 is a flowchart of Step S1402 in a control method for a heat management system according to an embodiment of the present disclosure; and
FIG. 34 is a schematic structural diagram of a vehicle according to an embodiment of the present disclosure.

### In the drawings:

### Embodiment 1

1-vehicle air conditioning system, 101-compressor, 102-in-vehicle condenser, 103-out-vehicle condenser, 104-first solenoid valve, 105-second expansion valve, 106-third expansion valve, 107-heat exchanger, 108-heat conducting component, 109-first one-way valve, 111-second one-way valve, 112-third one-way valve, 113-fourth one-way valve, 114-second solenoid valve, 115-third solenoid valve, 116-first expansion valve, 117-evaporator, 118-fourth solenoid valve, 119-fifth one-way valve, 121-liquid collector, 2-vehicle high-pressure heat exchange loop, 21-water pump, 22-high-pressure cooling pipe, 23-heat sink, 24-three-way valve, 241-first valve port, 242-second valve port, 243-third valve port, 25-three-way pipe, 251-first pipe opening, 252-second pipe opening, 253-third pipe opening, 3-power battery, 4-self-heating circuit, and 5-fan.

### Embodiment 2

1-vehicle air conditioning system, 101-compressor, 102-in-vehicle condenser, 103-out-vehicle condenser, 104-heat exchanger, 105-heat conducting component, 106-first expansion valve, 107-second expansion valve, 108-first solenoid valve, 109-evaporator, 121-third expansion valve, 122-second solenoid valve, 123-liquid collector, 124-one-way valve, 125-blower, 126-fan, 2-vehicle high-pressure heat exchange loop, 21-water pump, 22-high-pressure cooling pipe, 23-heat sink, 24-three-way valve, 241-first valve port, 242-second valve port, 243-third valve port, 25-three-way pipe, 251-first pipe opening, 252-second pipe opening, 253-third pipe opening, 3-power battery, and 4-self-heating circuit.

### Embodiment 3

1-heat management system, 2-heat exchange loop, 21-heat pump device, 212-gas-liquid separator, 211-compressor, 22-heat absorption heat exchanger, 23-heat supply heat exchanger, 221-in-vehicle heat exchanger, 222-battery pack heat exchanger, 2221-plate heat exchanger, 2222-battery pack liquid-cooling heat exchange plate, 2223-water pump, 2224-battery pack direct-cooling direct-heating heat exchange plate, 223-out-vehicle heat exchanger, 224-motor electric control assembly heat exchanger, 3-valve assembly, 31-first solenoid valve, 32-sixth solenoid valve, 33-second solenoid valve, 34-fourth solenoid valve, 35-fifth solenoid valve, 36-third solenoid valve, 301-first one-way valve, 302-second one-way valve, 303-third one-way valve, 304-fourth one-way valve, 305-fifth one-way valve, 306-throttle valve, 4-battery pack self-heating device, 41-battery pack, 411-first cell group, 412-second cell group, 42-motor electric control assembly, 421-motor, and 422-motor controller.

### Embodiment 4: 5-vehicle.

### DETAILED DESCRIPTION

To resolve an in-vehicle warming problem, a heat management system and a control method therefor and a vehicle having a heat management system are disclosed in the related art. The heat management system includes: a heat pump circulation device, the heat pump circulation device including a compressor, a condenser, an evaporator, an outdoor heat exchanger, and a throttling device, and the compressor, the condenser, the evaporator, the outdoor heat exchanger, and the throttling device being located in the same heat pump circulation liquid flow loop; a warm air core, the warm air core having a warm air core liquid flow path; a first circulation pump, the first circulation pump being in communication with the warm air core liquid flow path; and a heating device, the heating device having a heating liquid flow path, and the heating liquid flow path being connected in series to the first circulation pump and the warm air core liquid flow path to form a first circulation liquid flow loop. According to the heat management system of the present disclosure, a heating speed of air in an air conditioning device during heating is increased, and a temperature rise speed of air is fast, thereby improving the use comfort of a user. However, it is pointed out in the technology that when the heating device is added, for example, a fuel heater is added, a fuel filling port, a fuel pipe, and the like further need to be additionally added to a vehicle system. In another example, when an electrical heater is added, high-voltage system power distribution including a high-voltage wire harness, a high-voltage fuse, a high-voltage relay, and the like further needs to be additionally added to the vehicle system. In both the solutions in which a heating device is added, a vehicle arrangement space is occupied, and costs are also increased.

To resolve the problems that the heat management system provided in the related art occupies a large vehicle arrangement space and requires high implementation costs, the present disclosure provides a heat management system. A battery pack self-heating device triggers battery self-heating to enable a battery pack and a motor electric control assembly to generate heat. Through the optimization of the structure of the heat management system, the heat generated by the battery pack and the motor electric control assembly is provided to a passenger compartment through a heat exchanger for heating to supplement heating performance in a case that the system is at a low environmental temperature. In addition, another heating source is not required, a small vehicle arrangement space is occupied, and the costs are low.

The following describes embodiments of the present disclosure in detail. Examples of the embodiments are shown in the accompanying drawings. The embodiments described below with reference to the accompanying drawings are exemplary, and are intended to explain the present disclosure and cannot be construed as a limitation to the present disclosure.

### Embodiment 1

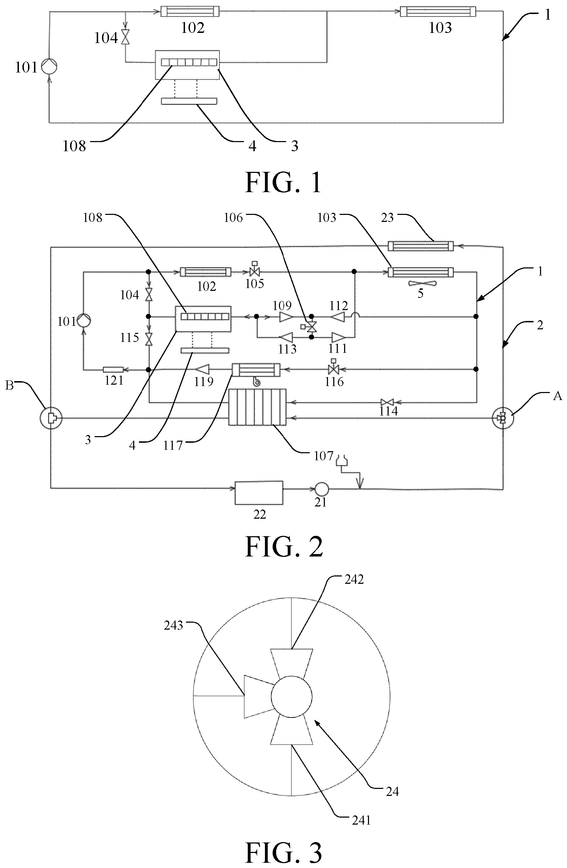

As shown in FIG. 1 and FIG. 2, a vehicle air conditioning system 1 provided in an embodiment of the present disclosure includes a compressor 101, an in-vehicle condenser 102, an out-vehicle condenser 103, a first solenoid valve 104, and a heat conducting component 108 connected to a power battery 3. The power battery 3 is connected to a self-heating circuit 4 used for self-heating the power battery 3. It may be understood that the self-heating circuit 4 is a circuit module that can implement high-frequency charging and discharging of the power battery 3. The self-heating circuit 4 includes a capacitor, an inductor, or another energy storage component. When the temperature of the power battery 3 is low, the power battery 3 discharges electricity, and the energy storage component in the self-heating circuit 4 stores electrical energy. After the power battery 3 discharges electricity for a period of time, the electrical polarity of the self-heating circuit 4 is reversed. In this case, the electrical energy stored in the energy storage component is then used to charge the power battery 3. In addition, in a process of charging the power battery 3, the internal resistance of the power battery 3 generates heat to enable the temperature of the power battery 3 to rise. A charging and discharging time or the alternation of charging and discharging states of the power battery 3 is controlled by turning on and off a switch component in the self-heating circuit 4 in an orderly manner.

Referring to FIG. 1 and FIG. 2, an outlet of the compressor 101 is in communication with an inlet of the in-vehicle condenser 102 and a first end of the first solenoid valve 104. An outlet of the in-vehicle condenser 102 is in communication with an inlet of the out-vehicle condenser 103. A second end of the first solenoid valve 104 is in communication with the inlet of the out-vehicle condenser 103 through the heat conducting component 108. An outlet of the out-vehicle condenser 103 is in communication with an inlet of the compressor 101.

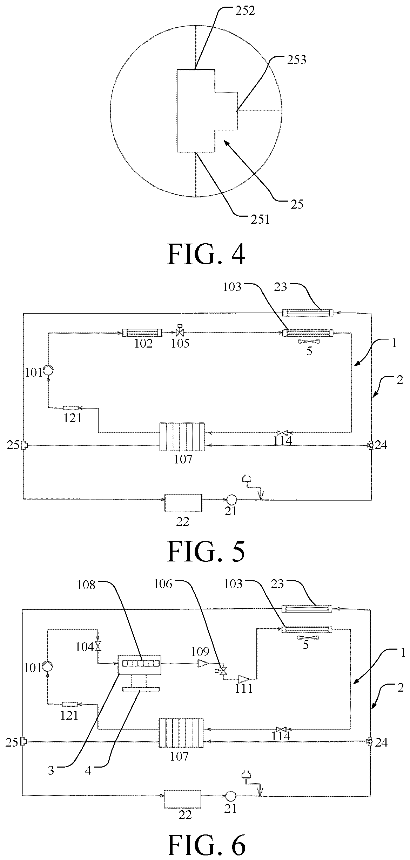

As shown in FIG. 1 and FIG. 5, the compressor 101, the in-vehicle condenser 102, and the out-vehicle condenser 103 form a first passenger compartment heating loop. Specifically, when an external environmental temperature is not very low (for example, 0°C to 10°C) and the heat pump energy efficiency of the vehicle air conditioning system 1 is within a relatively high range, a passenger compartment may be heated through the first passenger compartment heating loop. In this case, a refrigerant outputted by the in-vehicle condenser 102 flows into the out-vehicle condenser 103, absorbs heat in the external environment, and flows into the compressor 101. The compressor 101 then inputs the refrigerant into the in-vehicle condenser 102. The refrigerant dissipates heat in the in-vehicle condenser 102 to achieve the technical effect of heating the passenger compartment.

As shown in FIG. 1 and FIG. 6, the compressor 101, the first solenoid valve 104, the heat conducting component 108, and the out-vehicle condenser 103 form a first battery pack heat exchange loop. To be specific, the first passenger compartment heating loop in which the in-vehicle condenser 102 is located and the first battery pack heat exchange loop in which a second expansion valve 105 and the heat conducting component 108 are located are connected in parallel. Specifically, when the external environmental temperature is low and the power battery 3 works at a low environmental temperature, the temperature of the power battery 3 may be increased by using the first battery pack heat exchange loop. In this case, the first solenoid valve 104 is turned on. The compressor 101 inputs the refrigerant into the heat conducting component 108 through the first solenoid valve 104. The refrigerant dissipates heat in the heat conducting component 108 to achieve the technical effect of increasing the temperature of the power battery 3. After being inputted into the out-vehicle condenser 103 by the heat conducting component 108 to absorb heat in the external environment, the refrigerant flows back into the compressor 101. If the effect of increasing the temperature of the power battery 3 by the refrigerant in the heat conducting component 108 fails to meet a temperature requirement of the power battery 3, the power battery 3 may be self-heated through the self-heating circuit 4 for a battery, to enable the temperature of the power battery 3 to further rise.

The vehicle air conditioning system 1 in the embodiments of the present disclosure can achieve the technical effect of heating the passenger compartment, and can achieve the technical effect of increasing the temperature of the power battery 3 without arranging a PTC heater (or another battery heater) or the like to heat the power battery 3, so that the structure of a battery pack of the power battery 3 is more compact, thereby improving the space utilization of the battery pack, and reducing the weight of the whole vehicle. In addition, in a process of charging and discharging the power battery 3 by the self-heating circuit 4, the temperature of the power battery 3 increases due to self-heating thereof, to enable the power battery 3 to be heated by the refrigerant in the heat conducting component 108. In addition, the self-heating circuit 4 may also self-heat the power battery 3. To be specific, in the present disclosure, the double temperature rises of the power battery 3 can be implemented through the self-heating circuit 4 and the heat conducting component 108 in the first battery pack heat exchange loop. Therefore, the power battery 3 can maintain a required working temperature thereof in an environment with a lower temperature, thereby ensuring the performance and the service life of the power battery 3.

In an embodiment, the heat conducting component 108 includes a direct-cooling plate integrated in the power battery 3. It may be understood that the direct-cooling plate is integrated in the power battery 3, and is in full contact with a surface of the power battery 3, so that the refrigerant of the vehicle air conditioning system 1 may directly perform heat exchange (including direct evaporation and heat absorption of the refrigerant in the direct-cooling plate) with the power battery 3 in the direct-cooling plate, heat transfer stages are reduced, a heat loss is low, and heat exchange efficiency is high. In addition, the integration level of the power battery 3 is increased, the energy density of the power battery 3 is effectively increased, and the energy consumption of the whole vehicle is effectively reduced.

In an embodiment, as shown in FIG. 2, the vehicle air conditioning system 1 further includes a first expansion valve 116 and an evaporator 117. The outlet of the out-vehicle condenser 103 is in communication with the inlet of the compressor 101 sequentially through the first expansion valve 116 and the evaporator 117. Optionally, the vehicle air conditioning system 1 further includes a fifth one-way valve 119 and a blower arranged opposite to the evaporator 117. The blower may blow cold air released by the evaporator 117 into the passenger compartment, thereby improving the refrigeration effect of the passenger compartment. An outlet of the evaporator 117 is in communication with the inlet of the compressor 101 through the fifth one-way valve 119.

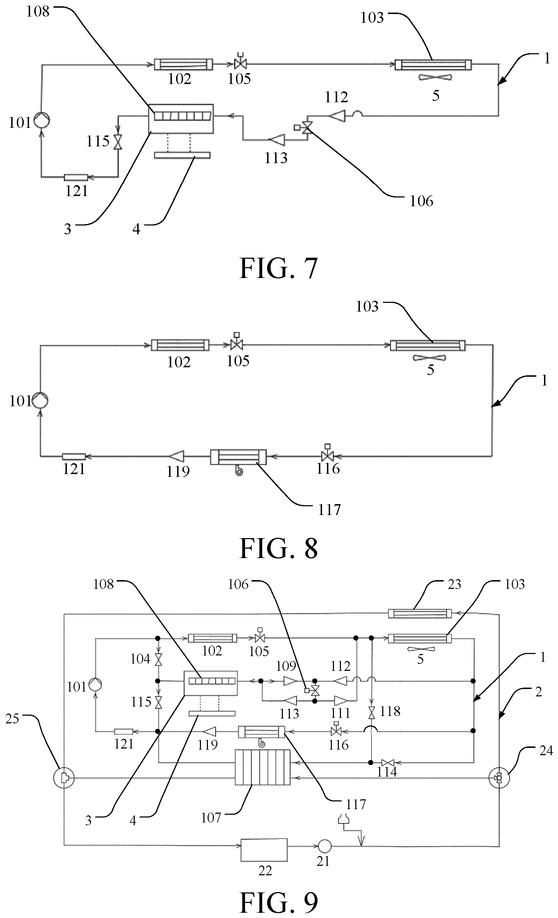

As shown in FIG. 8, the compressor 101, the in-vehicle condenser 102, the out-vehicle condenser 103, the first expansion valve 116, and the evaporator 117 form a passenger compartment refrigeration loop. It may be understood that the evaporator 117 and the first expansion valve 116 are located in the passenger compartment refrigeration loop, and the first expansion valve 116 may control on/off of the passenger compartment refrigeration loop. Specifically, when the temperature in the passenger compartment is high and a passenger has a refrigeration requirement, the passenger compartment refrigeration loop is controlled to be in a working state to perform refrigeration in the passenger compartment. In this case, the refrigerant is pressurized by the compressor 101 to turn into a high-pressure gaseous refrigerant. The high-pressure gaseous refrigerant flows into the out-vehicle condenser 103 through the in-vehicle condenser 102 (the in-vehicle condenser 102 does not perform heat exchange on the refrigerant). The high-pressure gaseous refrigerant transfers carried heat in the out-vehicle condenser 103 to the external environment to turn into a high-pressure liquid refrigerant. The high-pressure liquid refrigerant passes through the first expansion valve 116 to turn into a low-pressure liquid refrigerant. The low-pressure liquid refrigerant is inputted into the evaporator 117 to turn into a low-pressure gaseous refrigerant (the refrigerant absorbs heat in the passenger compartment in the evaporator 117 to achieve the technical effect of refrigerating the passenger compartment). The low-pressure gaseous refrigerant then flows into the compressor 101.

In an embodiment, as shown in FIG. 2, the vehicle air conditioning system 1 further includes the second expansion valve 105, a third expansion valve 106, a first one-way valve 109, a second one-way valve 111, a third one-way valve 112, a fourth one-way valve 113, a second solenoid valve 114, and a third solenoid valve 115.

The outlet of the in-vehicle condenser 102 is in communication with the inlet of the out-vehicle condenser 103 through the second expansion valve 105. The outlet of the out-vehicle condenser 103 is in communication with the inlet of the compressor 101 through the second solenoid valve 114. The second end of the first solenoid valve 104 is in communication with the inlet of the compressor 101 through the third solenoid valve 115. A first end of the heat conducting component 108 is in communication between the first solenoid valve 104 and the third solenoid valve 115. A second end of the heat conducting component 108 is in communication with an inlet of the first one-way valve 109. An outlet of the first one-way valve 109 is in communication with an inlet of the second one-way valve 111 through the third expansion valve 106. An outlet of the second one-way valve 111 is in communication between the second expansion valve 105 and the inlet of the out-vehicle condenser 103. The outlet of the out-vehicle condenser 103 is in communication with an inlet of the third one-way valve 112. An outlet of the third one-way valve 112 is in communication with an inlet of the fourth one-way valve 113 through the third expansion valve 106. An outlet of the fourth one-way valve 113 is in communication with the second end of the heat conducting component 108.

In a specific embodiment, the outlet of the compressor 101 is in communication with the inlet of the in-vehicle condenser 102 and the first end of the first solenoid valve 104. The outlet of the in-vehicle condenser 102 is in communication with the inlet of the out-vehicle condenser 103. The second end of the first solenoid valve 104 is in communication with a first end of the third solenoid valve 115 and the first end of the heat conducting component 108. The second end of the heat conducting component 108 is in communication with the inlet of the first one-way valve 109 and the outlet of the fourth one-way valve 113. The outlet of the first one-way valve 109 and the outlet of the third one-way valve 112 are both in communication with a first end of the third expansion valve 106. The inlet of the second one-way valve 111 and the inlet of the fourth one-way valve 113 are both in communication with a second end of the third expansion valve 106. The outlet of the second one-way valve 111 and a second end of the second expansion valve 105 are both in communication with the inlet of the out-vehicle condenser 103. The inlet of the third one-way valve 112 is in communication with the outlet of the out-vehicle condenser 103. The outlet of the out-vehicle condenser 103 and a second end of the third solenoid valve 115 are both in communication with the inlet of the compressor 101.

As shown in FIG. 7, the compressor 101, the in-vehicle condenser 102, the second expansion valve 105, the out-vehicle condenser 103, the third one-way valve 112, the third expansion valve 106, the fourth one-way valve 113, the heat conducting component 108, and the third solenoid valve 115 form a battery pack temperature reduction loop. Specifically, when the temperature of the power battery 3 is high (for example, greater than 38°C), the first solenoid valve 104 and the second solenoid valve 114 are turned off, and the second expansion valve 105, the third expansion valve 106, and the third solenoid valve 115 are turned on. In this case, the battery pack temperature reduction loop is in a working state to reduce the temperature of the power battery 3. In addition, the refrigerant is pressurized by the compressor 101 to turn into a high-pressure gaseous refrigerant. The high-pressure gaseous refrigerant flows into the out-vehicle condenser 103 through the in-vehicle condenser 102 and the second expansion valve 105 (the second expansion valve 105 is in a fully-open state, the in-vehicle condenser 102 does not perform heat exchange on the refrigerant, and the second expansion valve 105 does not throttle the refrigerant). The high-pressure gaseous refrigerant releases heat in the out-vehicle condenser 103 to the external environment to turn into a high-pressure liquid refrigerant. The high-pressure liquid refrigerant flows into the third expansion valve 106 through the third one-way valve 112. The high-pressure liquid refrigerant is turned into a low-pressure liquid refrigerant in the third expansion valve 106. The low-pressure liquid refrigerant flows into the heat conducting component 108 through the fourth one-way valve 113. The low-pressure liquid refrigerant is turned into a low-pressure gaseous refrigerant in the heat conducting component 108. The refrigerant absorbs the heat of the power battery 3 in the heat conducting component 108 to achieve the technical effect of reducing the temperature of the power battery 3. Subsequently, the low-pressure gaseous refrigerant then flows into the compressor 101 through the third solenoid valve 115. In this embodiment, the refrigerant can achieve the technical effect of increasing the temperature of the power battery 3 in the heat conducting component 108, to enable the power battery 3 to work at a high environmental temperature, thereby extending the service life of the power battery 3.

Optionally, as shown in FIG. 2, when the power battery 3 and the passenger compartment both have refrigeration requirements, the passenger compartment refrigeration loop and the battery pack temperature reduction loop are both in a working state. Specifically, the refrigerant is pressurized by the compressor 101 to turn into a high-pressure gaseous refrigerant. The high-pressure gaseous refrigerant flows into the out-vehicle condenser 103 through the in-vehicle condenser 102 and the second expansion valve 105, and transfers carried heat to the external environment to turn into a high-pressure liquid refrigerant. The high-pressure liquid refrigerant is divided into two paths. One path of high-pressure liquid refrigerant passes through the first expansion valve 116 to turn into a low-pressure liquid refrigerant to flow into the evaporator 117. The low-pressure liquid refrigerant is turned into a low-pressure gaseous refrigerant in the evaporator 117 (the refrigerant absorbs heat in the passenger compartment in the evaporator 117 to achieve the technical effect of refrigerating the passenger compartment), and the low-pressure liquid refrigerant flows back into the compressor 101. The other path of high-pressure liquid refrigerant flows into the third expansion valve 106 through the third one-way valve 112 to turn into a low-pressure liquid refrigerant. The low-pressure liquid refrigerant flows into the heat conducting component 108 through the third expansion valve 106 and the fourth one-way valve 113. The low-pressure liquid refrigerant absorbs the heat of the power battery 3 in the heat conducting component 108 to turn into a low-pressure gaseous refrigerant (to reduce the temperature of the power battery 3). The low-pressure gaseous refrigerant flows into the compressor 101 through the third solenoid valve 115.

As shown in FIG. 6, the first battery pack heat exchange loop is formed by the compressor 101, the first solenoid valve 104, the heat conducting component 108, the first one-way valve 109, the third expansion valve 106, the second one-way valve 111, the out-vehicle condenser 103, and the second solenoid valve 114. Specifically, the second expansion valve 105 and the third solenoid valve 115 are turned off, and the first solenoid valve 104, the third expansion valve 106, and the second solenoid valve 114 are turned on. In this case, the first battery pack heat exchange loop is in a working state to increase the temperature of the power battery 3. In addition, the refrigerant is pressurized by the compressor 101 to turn into a high-pressure gaseous refrigerant. The high-pressure gaseous refrigerant flows into the heat conducting component 108 through the first solenoid valve 104. The high-pressure gaseous refrigerant is turned into a high-pressure liquid refrigerant in the heat conducting component 108, and transfers heat to the power battery 3 to achieve the technical effect of increasing the temperature of the power battery 3. The high-pressure liquid refrigerant flows into the third expansion valve 106 through the first one-way valve 109. The high-pressure liquid refrigerant is turned into a low-pressure liquid refrigerant in the third expansion valve 106. The low-pressure liquid refrigerant flows into the out-vehicle condenser 103 through the second one-way valve 111. The low-pressure liquid refrigerant absorbs the heat in the external environment in the out-vehicle condenser 103 to turn into a low-pressure gaseous refrigerant. The low-pressure gaseous refrigerant then flows back into the compressor 101 through the second solenoid valve 114.

As shown in FIG. 5, the first passenger compartment heating loop is formed by the compressor 101, the in-vehicle condenser 102, the second expansion valve 105, the out-vehicle condenser 103, and the second solenoid valve 114. Specifically, when the first passenger compartment heating loop is in a working state, the first solenoid valve 104, the third solenoid valve 115, and the third expansion valve 106 are turned off, and the second expansion valve 105 and the second solenoid valve 114 are turned on. The refrigerant is pressurized by the compressor 101 to turn into a high-pressure gaseous refrigerant to flow into the in-vehicle condenser 102. The high-pressure gaseous refrigerant releases heat to the passenger compartment in the in-vehicle condenser 102 (to heat the passenger compartment) to turn into a high-pressure liquid refrigerant. The high-pressure liquid refrigerant is expanded by the second expansion valve 105 to turn into a low-pressure liquid refrigerant. The low-pressure liquid refrigerant absorbs the heat in the external environment in the out-vehicle condenser 103 to turn into a low-pressure gaseous refrigerant. The low-pressure gaseous refrigerant then flows back into the compressor 101 through the second solenoid valve 114.

In this embodiment, the second expansion valve 105 may control on/off of the first passenger compartment heating loop, the first solenoid valve 104 may control on/off of the first battery pack heat exchange loop, and the third solenoid valve 115 may control on/off of the battery pack temperature reduction loop. The vehicle air conditioning system 1 has a high integration level, and has flexible switching between different modes.

In an embodiment, as shown in FIG. 2, the vehicle air conditioning system 1 further includes a heat exchanger 107 in communication with a vehicle high-pressure heat exchange loop 2, and the second solenoid valve 114 is in communication with the inlet of the compressor 101 through the heat exchanger 107. In the vehicle high-pressure heat exchange loop 2, a coolant passes through a driving motor, a vehicle motor controller, a vehicle-mounted charging device, and other vehicle high-voltage devices (not shown in the figure). When a vehicle is a hybrid electric vehicle, the vehicle high-voltage devices further include an engine, and the like. In a working process of the vehicle high-voltage devices, the temperatures of the devices rise. The heat exchanger 107 and the vehicle high-pressure heat exchange loop 2 are arranged opposite. The refrigerant in the vehicle air conditioning system 1 and the coolant in the vehicle high-pressure heat exchange loop 2 may perform heat exchange in the heat exchanger 107. To be specific, the coolant in the vehicle high-pressure heat exchange loop 2 absorbs heat released by the vehicle high-voltage devices, and transfers the heat to the refrigerant in the vehicle air conditioning system 1 through the heat exchanger 107, making the temperature of the coolant rise.

Specifically, the first passenger compartment heating loop is formed by the compressor 101, the in-vehicle condenser 102, the second expansion valve 105, the out-vehicle condenser 103, the second solenoid valve 114, and the heat exchanger 107. In this embodiment, when the passenger compartment refrigeration loop is in a working state, after the refrigerant outputted by the in-vehicle condenser flows into the out-vehicle condenser 103 and absorbs the heat in the external environment, the refrigerant outputted by the out-vehicle condenser 103 flows into the heat exchanger 107 through the second solenoid valve 114. The refrigerant absorbs heat in the vehicle high-pressure heat exchange loop 2 in the heat exchanger 107. Subsequently, the refrigerant absorbs heat in the vehicle high-pressure heat exchange loop 2 in the heat exchanger 107 and then flows back into the compressor 101. The compressor 101 then inputs the refrigerant into the in-vehicle condenser 102. The refrigerant dissipates heat in the in-vehicle condenser 102 to achieve the technical effect of heating the passenger compartment. The vehicle air conditioning system 1 in the present disclosure can absorb heat in the external environment to heat the passenger compartment, and can absorb heat in the vehicle high-pressure heat exchange loop 2 through the refrigerant in the heat exchanger 107 to heat the passenger compartment, thereby further improving the heat pump efficiency of the vehicle air conditioning system 1, improving the energy utilization of the whole vehicle, and improving the mileage of the whole vehicle. In addition, the refrigerant in the heat exchanger 107 may absorb heat in the vehicle high-pressure heat exchange loop 2 to reduce the temperature of the coolant in the vehicle high-pressure heat exchange loop 2, and therefore the cooling efficiency of the vehicle high-pressure heat exchange loop 2 is also improved.

In addition, as shown in FIG. 6, the first battery pack heat exchange loop is formed by the compressor 101, the first solenoid valve 104, the heat conducting component 108, the first one-way valve 109, the third expansion valve 106, the second one-way valve 111, the out-vehicle condenser 103, the second solenoid valve 114, and the heat exchanger 107. When the first battery pack heat exchange loop is in a working state, the refrigerant absorbs heat in the vehicle high-pressure heat exchange loop 2 in the heat exchanger 107 and then flows back into the compressor 101. In this embodiment, after absorbing heat in the vehicle high-pressure heat exchange loop 2 in the heat exchanger 107, the refrigerant can heat the power battery 3 in the heat conducting component 108, thereby further improving the heat pump efficiency of the vehicle air conditioning system 1, improving the energy utilization of the whole vehicle, and improving the mileage of the whole vehicle. In addition, the refrigerant in the heat exchanger 107 of the vehicle air conditioning system 1 of the present disclosure can reduce the temperature of the coolant in the vehicle high-pressure heat exchange loop 2 after absorbing heat in the vehicle high-pressure heat exchange loop 2, thereby improving the cooling efficiency of the vehicle high-pressure heat exchange loop 2.

In an embodiment, as shown in FIG. 2, the vehicle air conditioning system 1 further includes a liquid collector 121. The second end of the third solenoid valve 115, the outlet of the evaporator 117, and an outlet of the heat exchanger 107 are all in communication with the inlet of the compressor 101 through the liquid collector 121. It may be understood that the liquid collector 121 may perform gas-liquid separation on the refrigerant, to ensure that only a gaseous refrigerant enters the compressor 101. Therefore, with the design of the liquid collector 121, while the refrigeration and heating effects of the vehicle air conditioning system 1 are ensured, the service life of the vehicle air conditioning system 1 is further extended.

In an embodiment, as shown in FIG. 9, the vehicle air conditioning system 1 further includes a fourth solenoid valve 118. A first end of the fourth solenoid valve 118 is in communication between the second expansion valve 105 and the inlet of the out-vehicle condenser 103. A second end of the fourth solenoid valve 118 is in communication between the third solenoid valve 115 and the heat exchanger 107. A branch in which the fourth solenoid valve 118 is located is connected in parallel to a branch in which the out-vehicle condenser 103 and the second solenoid valve 114 are located.

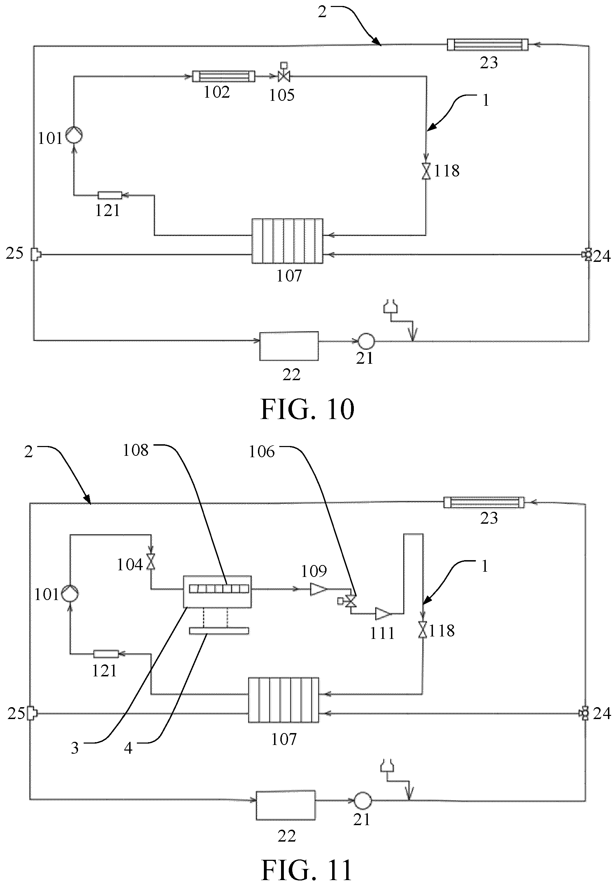

As shown in FIG. 10, the compressor 101, the in-vehicle condenser 102, the second expansion valve 105, the fourth solenoid valve 118, and the heat exchanger 107 form a second passenger compartment heating loop. Specifically, when the external environmental temperature is very low and the external environment is no longer suitable for use as a heat source of the vehicle air conditioning system 1, the second passenger compartment heating loop is controlled to be in a working state to increase the temperature of the passenger compartment. The refrigerant is pressurized by the compressor 101 to turn into a high-pressure gaseous refrigerant. The high-pressure gaseous refrigerant performs heat exchange with the passenger compartment through the in-vehicle condenser 102 to turn into a high-pressure liquid refrigerant (the refrigerant dissipates heat in the passenger compartment to achieve the technical effect of heating the passenger compartment of the vehicle). The high-pressure liquid refrigerant is depressurized by the second expansion valve 105 to turn into a low-pressure liquid refrigerant. The low-pressure liquid refrigerant flows into the heat exchanger 107 through the second solenoid valve 114. The low-pressure liquid refrigerant absorbs heat in the vehicle high-pressure heat exchange loop 2 in the heat exchanger 107 to turn into a low-pressure gaseous refrigerant. The low-pressure gaseous refrigerant then flows back into the compressor 101.

As shown in FIG. 11, the compressor 101, the first solenoid valve 104, the heat conducting component 108, the first one-way valve 109, the third expansion valve 106, the second one-way valve 111, the fourth solenoid valve 118, and the heat exchanger 107 form a second battery pack heat exchange loop. Specifically, when the external environmental temperature is very low and the external environment is no longer suitable for use as a heat source of the vehicle air conditioning system 1, the second battery pack heat exchange loop is controlled to be in a working state to increase the temperature of the power battery 3. The refrigerant is pressurized by the compressor 101 to turn into a high-pressure gaseous refrigerant. The high-pressure gaseous refrigerant flows into the heat conducting component 108 through the first solenoid valve 104. The high-pressure gaseous refrigerant transfers heat to the power battery 3 in the heat conducting component 108 to turn into a high-pressure liquid refrigerant, and the refrigerant achieves the technical effect of increasing the temperature of the power battery 3 in the heat conducting component 108. The high-pressure liquid refrigerant flows into the third expansion valve 106 through the first one-way valve 109. The high-pressure gaseous refrigerant is turned into a low-pressure liquid refrigerant in the third expansion valve 106. The low-pressure liquid refrigerant then flows back into the heat exchanger 107 through the second one-way valve 111 and the fourth solenoid valve 118 sequentially. The low-pressure liquid refrigerant absorbs heat in the vehicle high-pressure heat exchange loop 2 in the heat exchanger 107 to turn into a low-pressure gaseous refrigerant. The low-pressure gaseous refrigerant then flows back into the compressor 101. In this embodiment, the second battery pack heat exchange loop may completely absorb heat from the vehicle high-pressure system and then increase the temperature of the power battery 3, to enable the power battery 3 to work in an environment with a lower temperature.

As shown in FIG. 2 and FIG. 9, another embodiment of the present disclosure further provides a vehicle heat management system, including a vehicle high-pressure heat exchange loop 2, a power battery 3, a self-heating circuit 4, and the foregoing vehicle air conditioning system 1.

In an embodiment, as shown in FIG. 2 and FIG. 9, the vehicle high-pressure heat exchange loop 2 includes a water pump 21 and a high-pressure cooling pipe 22 used for reducing the temperature of the vehicle high-voltage devices. The vehicle air conditioning system 1 further includes a heat exchanger 107 in communication with the vehicle high-pressure heat exchange loop 2. The outlet of the out-vehicle condenser 103 is in communication with the inlet of the compressor 101 through the heat exchanger 107. An outlet of the water pump 21 is in communication with a coolant inlet of the heat exchanger 107. A coolant outlet of the heat exchanger 107 is in communication with an inlet of the high-pressure cooling pipe 22. An outlet of the high-pressure cooling pipe 22 is connected to an inlet of the water pump 21. It may be understood that when flowing through the high-pressure cooling pipe 22, a coolant may achieve the technical effect of reducing the temperature of the vehicle high-voltage devices. A refrigerant flow channel for a refrigerant to flow through and a coolant flow channel for a coolant to flow through are provided in the heat exchanger 107. A flowing direction of the refrigerant in the refrigerant flow channel may be opposite to a flowing direction of the coolant in the coolant flow channel, so that in the heat exchanger 107, heat exchange between the refrigerant and the coolant can be more thorough.

The water pump 21, the heat exchanger 107, and the high-pressure cooling pipe 22 form a first high-pressure heat exchange loop. It may be understood that when the refrigerant in the vehicle air conditioning system 1 needs to absorb the heat in the vehicle high-pressure heat exchange loop 2 and the coolant flows through the heat exchanger 107 of the first high-pressure heat exchange loop, the coolant performs heat exchange with the refrigerant in the vehicle air conditioning system 1 in the heat exchanger 107, so that while the efficiency of the vehicle air conditioning system 1 is improved, the cooling efficiency of the vehicle high-voltage devices by the vehicle high-pressure system is further improved.

In an embodiment, as shown in FIG. 2 and FIG. 9, the vehicle high-pressure heat exchange loop 2 further includes a heat sink 23, a three-way valve 24, and a three-way pipe 25. As shown in FIG. 3, a first valve port 241, a second valve port 242, and a third valve port 243 are provided in the three-way valve 24. As shown in FIG. 4, a first pipe opening 251, a second pipe opening 252, and a third pipe opening 253 are provided in the three-way pipe 25.

The outlet of the water pump 21 is in communication with the first valve port 241. The second valve port 242 is in communication with an inlet of the heat sink 23. An outlet of the heat sink 23 is in communication with the second pipe opening 252. The third valve port 243 is in communication with the coolant inlet of the heat exchanger 107. The coolant outlet of the heat exchanger 107 is in communication with the third pipe opening 253. The first pipe opening 251 is in communication with the inlet of the high-pressure cooling pipe 22. It may be understood that a branch in which the heat sink 23 is located is connected in parallel to a branch in which the heat exchanger 107 is located.

The water pump 21, the heat sink 23, and the high-pressure cooling pipe 22 form a second high-pressure heat exchange loop. It may be understood that in the second high-pressure heat exchange loop, when the coolant flows through the out-vehicle condenser 103, heat in the coolant may be released into the external environment, and the cooled coolant flows into the high-pressure cooling pipe 22 to reduce the temperature of the vehicle high-voltage devices.

Specifically, when the refrigerant in the vehicle air conditioning system 1 needs to absorb the heat released by the vehicle high-pressure heat exchange loop 2 (for example, the first passenger compartment heating loop, or the first battery pack heat exchange loop), the first valve port 241 and the third valve port 243 are both turned on, and the second valve port 242 is turned off, so that the coolant flows in the first high-pressure heat exchange loop. Specifically, when the refrigerant in the vehicle air conditioning system 1 does not need to absorb the heat released by the vehicle high-pressure heat exchange loop 2 (for example, the battery pack temperature reduction loop, or the passenger compartment refrigeration loop), the first valve port 241 and the second valve port 242 are both turned on, and the third valve port 243 is turned off, so that the coolant flows in the second high-pressure heat exchange loop.

In an embodiment, when the first valve port 241, the second valve port 242, and the third valve port 243 are all turned on, the first high-pressure heat exchange loop and the second high-pressure heat exchange loop both work. In this case, the coolant can transfer heat to the vehicle air conditioning system 1, and can further transfer heat to the external environment, thereby ensuring the cooling effect of the vehicle high-voltage devices by the vehicle high-pressure system.

In an embodiment, as shown in FIG. 1, the vehicle heat management system further includes a fan 5. The fan 5 is arranged opposite to both the out-vehicle condenser 103 and the heat sink 23. Through the rotation of the fan 5, the refrigerant flowing through the out-vehicle condenser 103 transfers heat to the external environment more easily, and the coolant flowing through the heat sink 23 transfers heat to the external environment more easily. The out-vehicle condenser 103 and the heat sink 23 share one fan 5. When the fan 5 rotates, air in front of an air intake grill flows through the heat sink 23 and the out-vehicle condenser 103 at a high speed. The refrigerant flows through the out-vehicle condenser 103 for absorption to reduce the temperature of air besides the out-vehicle condenser 103. The cooled air can be blown to the heat sink 23 by the fan 5, so that the technical effect of reducing the temperature of the coolant flowing through the heat sink 23 can be achieved, thereby improving the temperature reduction effect of the vehicle high-voltage devices by the second high-pressure heat exchange loop.

It needs to be noted that when various refrigeration and heating loops in the vehicle air conditioning system 1 and the vehicle heat management system of the present disclosure work, it is only necessary to control solenoid valves, expansion valves, and the like on a corresponding loop to be turned on and control solenoid valves, expansion valves, and the like on other loops to be turned off. In addition, through the control of the on/off of the solenoid valves and the expansion valves in the present disclosure, any more than two loops may be in a working state at the same time, which also falls within the protection scope of the present disclosure.

### Embodiment 2

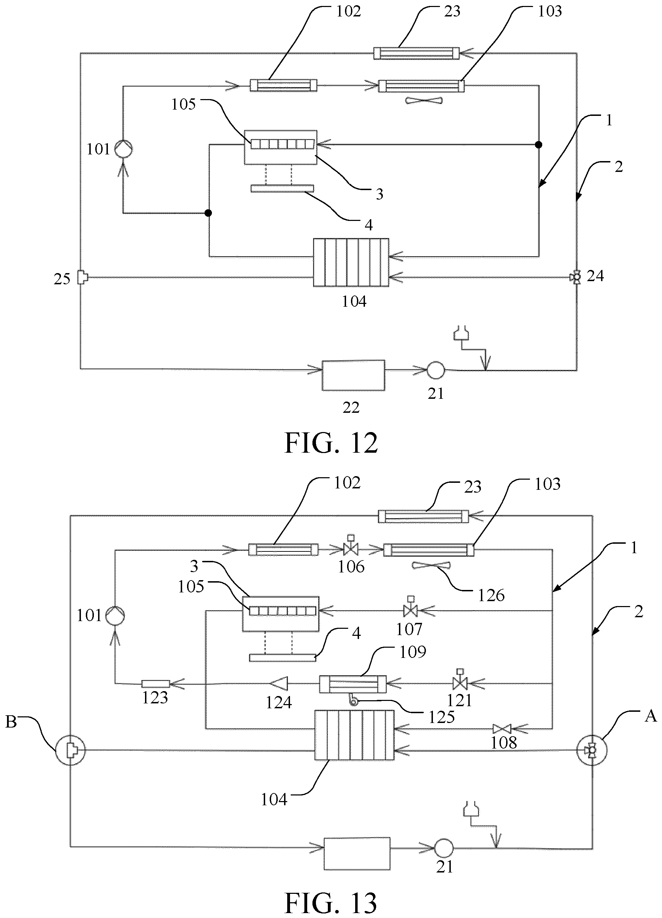

As shown in FIG. 12 and FIG. 13, a vehicle air conditioning system 1 provided in an embodiment of the present disclosure includes a compressor 101, an in-vehicle condenser 102, an out-vehicle condenser 103, a heat exchanger 104 in communication with the vehicle high-pressure heat exchange loop 2, and a heat conducting component 105 connected to a power battery 3. The power battery 3 is connected to a self-heating circuit 4 used for self-heating the power battery 3. It may be understood that the self-heating circuit 4 is a circuit module that can implement high-frequency charging and discharging of the power battery 3. The self-heating circuit 4 includes a capacitor, an inductor, or another energy storage component. When the temperature of the power battery 3 is low, the power battery 3 discharges electricity, and the energy storage component in the self-heating circuit 4 stores electrical energy. After the power battery 3 discharges electricity for a period of time, the electrical polarity of the self-heating circuit 4 is reversed. In this case, the electrical energy stored in the energy storage component is then used to charge the power battery 3. In addition, in a process of charging the power battery 3, the internal resistance of the power battery 3 generates heat to enable the temperature of the power battery 3 to rise. A charging and discharging time or the alternation of charging and discharging states of the power battery 3 is controlled by turning on and off a switch component in the self-heating circuit 4 in an orderly manner.

It may be understood that in the vehicle high-pressure heat exchange loop 2, a coolant passes through a driving motor, a vehicle motor controller, a vehicle-mounted charging device, and other vehicle high-voltage devices (not shown in the figure). When a vehicle is a hybrid electric vehicle, the vehicle high-voltage devices further include an engine, and the like. In a working process of the vehicle high-voltage devices, the temperatures of the devices rise. The heat exchanger 104 and the vehicle high-pressure heat exchange loop 2 are arranged opposite. The refrigerant in the vehicle air conditioning system 1 and the coolant in the vehicle high-pressure heat exchange loop 2 may perform heat exchange in the heat exchanger 104. To be specific, the coolant in the vehicle high-pressure heat exchange loop 2 absorbs heat released by the vehicle high-voltage devices, and transfers the heat to the refrigerant in the vehicle air conditioning system 1 through the heat exchanger 104, making the temperature of the coolant rise.

Referring to FIG. 12 and FIG. 13, an outlet of the compressor 101 is in communication with an inlet of the in-vehicle condenser 102. An outlet of the in-vehicle condenser 102 is in communication with an inlet of the out-vehicle condenser 103. An outlet of the out-vehicle condenser 103 is in communication with an inlet of the heat conducting component 105 and a refrigerant inlet of the heat exchanger 104. An outlet of the heat conducting component 105 and a refrigerant outlet of the heat exchanger 104 are both in communication with an inlet of the compressor 101.

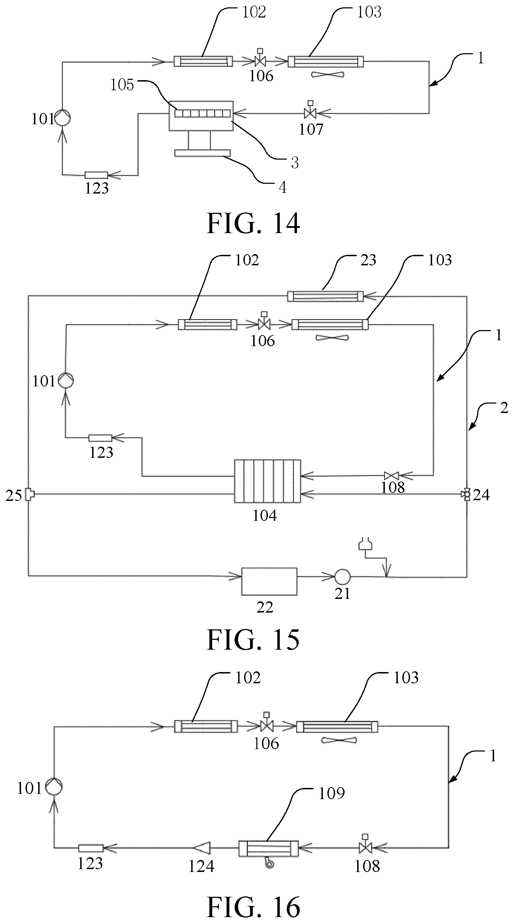

As shown in FIG. 14, the compressor 101, the in-vehicle condenser 102, the out-vehicle condenser 103, and the heat conducting component 105 form a first battery pack heat exchange loop, which can implement the heating of the passenger compartment. Specifically, when the external environmental temperature is high and the heat pump energy efficiency of the vehicle air conditioning system 1 is within a relatively low range, a refrigerant outputted by the in-vehicle condenser 102 flows into the out-vehicle condenser 103, absorbs heat in the external environment, and flows into the heat conducting component 105. The refrigerant may absorb heat (the heat of the power battery 3 includes heat released when the power battery 3 works, and heat released by the power battery 3 when the self-heating circuit 4 works) of the power battery 3 in the heat exchanger 104 and flow back into the compressor. Subsequently, a refrigerant outputted by the compressor 101 dissipates heat in the passenger compartment through the in-vehicle condenser 102 to achieve the technical effect of heating the passenger compartment.

As shown in FIG. 15, the compressor 101, the in-vehicle condenser 102, the out-vehicle condenser 103, and the heat exchanger 104 form a first passenger compartment heating loop. Specifically, when the external environmental temperature is high and the heat pump energy efficiency of the vehicle air conditioning system 1 is within a relatively low range, a refrigerant outputted by the in-vehicle condenser 102 flows into the out-vehicle condenser 103, absorbs heat in the external environment, and flows into the heat exchanger 104. The refrigerant may absorb heat in the vehicle high-pressure heat exchange loop 2 in the heat exchanger 104 and then flow back into the compressor. Subsequently, a refrigerant outputted by the compressor 101 dissipates heat in the passenger compartment through the in-vehicle condenser 102 to achieve the technical effect of heating the passenger compartment.

It may be understood that when the first battery pack heat exchange loop and the first passenger compartment heating loop both work, the refrigerant is pressurized by the compressor 101 to flow into the in-vehicle condenser 102. After performing heat exchange with the passenger compartment through the in-vehicle condenser 102 and transferring heat to the passenger compartment and flowing into the out-vehicle condenser 103 to absorb heat in the external environment, the refrigerant is divided into two branches: the first battery pack heat exchange loop and the first passenger compartment heating loop. The refrigerant in the first battery pack heat exchange loop flows into the heat conducting component 105 and absorbs heat (including heat released when the power battery 3 works, or heat released by the power battery 3 when the self-heating circuit charges or discharges the power battery 3) of the power battery 3 in the heat conducting component 105. The refrigerant in the first passenger compartment heating loop flows into the heat exchanger 104, and absorbs the heat released by the vehicle high-pressure heat exchange loop 2 in the heat exchanger 104. The refrigerants in the two branches absorb heat and flow into the compressor 101 again.

It may be understood that as shown in FIG. 12 and FIG. 13, the first battery pack heat exchange loop in which the heat conducting component 105 is located is connected in parallel to the first passenger compartment heating loop in which the heat exchanger 104 is located. It may be understood that the first battery pack heat exchange loop and the first passenger compartment heating loop may work simultaneously. In this case, the heating effect of the passenger compartment is optimal. This is suitable for a moment at which the external environmental temperature is high and the energy efficiency of the vehicle air conditioning system 1 is low. However, when the energy efficiency of the vehicle air conditioning system 1 is normal, one loop may be selected as required to heat the passenger compartment. For example, when the power battery 3 does not need to be heated through the self-heating circuit 4, the passenger compartment may be heated only through the refrigerant in the first battery pack heat exchange loop. In this case, the refrigerant does not absorb heat generated by the power battery 3 due to self-heating in the heat conducting component 105. When an amount of heat generated by the vehicle high-voltage devices working in the vehicle high-pressure heat exchange loop 2 is low, or the external environmental temperature makes the heat pump energy efficiency of the vehicle air conditioning system 1 in a relatively high range, the refrigerant can heat the passenger compartment only through the first passenger compartment heating loop, and the refrigerant does not absorb the heat in the vehicle high-pressure heat exchange loop 2 in the heat exchanger 104.

In the present disclosure, the refrigerant in the vehicle air conditioning system 1 may absorb heat in the external environment through the out-vehicle condenser 103, or may absorb heat (including heat released when the power battery 3 works, or heat released by the power battery 3 when the self-heating circuit charges or discharges the power battery 3) of the power battery 3 through the heat conducting component 105, or may absorb the heat in the vehicle high-pressure heat exchange loop 2 through the heat exchanger 104. The refrigerant that has absorbed heat transfers the heat to the passenger compartment in the in-vehicle condenser 102 to achieve the technical effect of heating the passenger compartment of the vehicle, thereby improving the heat pump efficiency of the vehicle air conditioning system 1, improving the energy utilization of the whole vehicle, and improving the mileage of the whole vehicle. In addition, the refrigerant in the heat exchanger 104 of the vehicle air conditioning system 1 of the present disclosure can reduce the temperature in the vehicle high-pressure heat exchange loop 2 after absorbing heat in the vehicle high-pressure heat exchange loop 2, thereby improving the cooling efficiency of the vehicle high-pressure heat exchange loop 2.

In an embodiment, as shown in FIG. 13, the vehicle air conditioning system 1 further includes a first expansion valve 106, a second expansion valve 107, and a first solenoid valve 108. The first expansion valve 106 is connected between the outlet of the in-vehicle condenser 102 and the inlet of the out-vehicle condenser 103. The outlet of the out-vehicle condenser 103 is in communication with the inlet of the heat conducting component 105 through the second expansion valve 107. The outlet of the out-vehicle condenser 103 is in communication with the refrigerant inlet of the heat exchanger 104 through the first solenoid valve 108.

In a specific embodiment, a first end of the first expansion valve 106 is in communication with the outlet of the in-vehicle condenser 102. A second end of the first expansion valve 106 is in communication with the inlet of the out-vehicle condenser 103. A first end of the second expansion valve 107 and a first end of the first solenoid valve 108 are both in communication with the outlet of the out-vehicle condenser 103. A second end of the second expansion valve 107 is in communication with the inlet of the heat conducting component 105. A second end of the first solenoid valve 108 is in communication with the refrigerant inlet of the heat exchanger 104. It may be understood that the heat conducting component 105 and the second expansion valve 107 are both located in the first battery pack heat exchange loop, and the second expansion valve 107 may control on/off of the first battery pack heat exchange loop. The heat exchanger 104 and the first solenoid valve 108 are located in the first passenger compartment heating loop, and the first solenoid valve 108 may control on/off of the first passenger compartment heating loop.

As shown in FIG. 15, the first passenger compartment heating loop is formed by the compressor 101, the in-vehicle condenser 102, the first expansion valve 106, the out-vehicle condenser 103, the first solenoid valve 108, and the heat exchanger 104. Specifically, the refrigerant is pressurized by the compressor 101 to turn into a high-pressure gaseous refrigerant. After the high-pressure gaseous refrigerant performs heat exchange with the passenger compartment through the in-vehicle condenser 102, the high-pressure gaseous refrigerant is turned into a high-pressure liquid refrigerant (the refrigerant dissipates heat in the passenger compartment to achieve the technical effect of heating the passenger compartment of the vehicle). The high-pressure liquid refrigerant is expanded by the first expansion valve 106 to turn into a low-pressure liquid refrigerant. The low-pressure liquid refrigerant absorbs heat in the external environment in the out-vehicle condenser 103 and then flows back into the compressor 101 through the heat exchanger 104. It needs to be noted that when the external environmental temperature is low and the heat pump energy efficiency of the vehicle air conditioning system 1 is within a relatively low range, the refrigerant in the vehicle air conditioning system 1 may absorb heat released when the vehicle high-pressure heat exchange loop 2 works through the heat exchanger 104. When the external environmental temperature is high and the heat pump energy efficiency of the vehicle air conditioning system 1 is within a relatively high range, the coolant in the vehicle high-pressure heat exchange loop 2 does not absorb heat released when the vehicle high-pressure heat exchange loop 2 works through the heat exchanger 104.

As shown in FIG. 14, the first battery pack heat exchange loop is formed by the compressor 101, the in-vehicle condenser 102, the first expansion valve 106, the out-vehicle condenser 103, the second expansion valve 107, and the heat conducting component 105.

In an aspect of this embodiment, the first battery pack heat exchange loop may be used for heating the passenger compartment. In this case, the first expansion valve 106 is in a throttled state, and the refrigerant is pressurized by the compressor 101 to turn into a high-pressure gaseous refrigerant. After the high-pressure gaseous refrigerant performs heat exchange with the passenger compartment through the in-vehicle condenser 102, the high-pressure gaseous refrigerant is turned into a high-pressure liquid refrigerant (the refrigerant dissipates heat in the passenger compartment to achieve the technical effect of heating the passenger compartment of the vehicle). The high-pressure liquid refrigerant is expanded by the first expansion valve 106 to turn into a low-pressure liquid refrigerant. The low-pressure liquid refrigerant flows into the heat conducting component 105 through the out-vehicle condenser 103 and the second expansion valve 107. The low-pressure liquid refrigerant absorbs the heat of the power battery 3 in the heat conducting component 105 to turn into a low-pressure gaseous refrigerant. The low-pressure gaseous refrigerant then flows back into the compressor 101.

In an aspect of this embodiment, the first battery pack heat exchange loop may be used for reducing the temperature of the battery pack. Specifically, when the temperature of the power battery 3 reaches a cooling start trigger point and the passenger compartment does not have a refrigeration requirement, the first expansion valve 106 is set to be in a fully-open state. In this case, the refrigerant is pressurized by the compressor 101 to turn into a high-pressure gaseous refrigerant. The high-pressure gaseous refrigerant flows into the out-vehicle condenser 103 through the in-vehicle condenser 102 and the first expansion valve 106 (in this case, neither of the in-vehicle condenser 102 and the first expansion valve 106 performs heat exchange and throttling on the refrigerant). The high-pressure gaseous refrigerant releases heat in the out-vehicle condenser 103 to the external environment to turn into a high-pressure liquid refrigerant. The high-pressure liquid refrigerant flows into the second expansion valve 107 to turn into a low-pressure liquid refrigerant. The low-pressure liquid refrigerant absorbs the heat of the power battery 3 in the heat conducting component 105 to turn into a low-pressure gaseous refrigerant and flow into the compressor 101. In this embodiment, the refrigerant in the heat conducting component 105 can reduce the temperature of the power battery 3, to enable the power battery 3 to work at a high environmental temperature, thereby extending the service life of the battery pack.

In the present disclosure, the vehicle air conditioning system 1 may use the heat of the battery pack and the heat in the vehicle high-pressure heat exchange loop 2 to heat the passenger compartment, thereby improving the heat pump efficiency of the vehicle air conditioning system 1. In addition, the coolant in the vehicle high-pressure heat exchange loop 2 and the refrigerant in the vehicle air conditioning system 1 may perform heat coupling in the heat exchanger 104, to implement cooling of the vehicle high-pressure heat exchange loop 2 through the heat exchanger 104, thereby improving the cooling efficiency of the vehicle high-pressure heat exchange loop 2, and improving the energy utilization of the whole vehicle.

When the first battery pack heat exchange loop and the first passenger compartment heating loop both work, the refrigerant is pressurized by the compressor 101 to turn into a high-pressure gaseous refrigerant. The high-pressure gaseous refrigerant transfers heat to the passenger compartment in the in-vehicle condenser 102 to turn into a high-pressure liquid refrigerant. The high-pressure liquid refrigerant passes through the first expansion valve 106 to turn into a low-pressure liquid refrigerant. The low-pressure liquid refrigerant passes through the out-vehicle condenser 103 to be divided into two branches. The refrigerant in the first battery pack heat exchange loop flows into the heat conducting component 105, and absorbs the heat of the power battery 3 in the heat conducting component 105 to turn into a low-pressure gaseous refrigerant. The low-pressure gaseous refrigerant then flows back into the compressor 101. The refrigerant in the first passenger compartment heating loop flows into the heat exchanger 104 through the first solenoid valve 108. The refrigerant absorbs heat released by the vehicle high-pressure system in the heat exchanger 104 to turn into a low-pressure gaseous refrigerant. The low-pressure gaseous refrigerant then flows back into the compressor 101.

In an embodiment, as shown in FIG. 13, the vehicle air conditioning system 1 further includes an evaporator 109 and a third expansion valve 121. The outlet of the out-vehicle condenser 103 is in communication with the inlet of the compressor 101 sequentially through the third expansion valve 121 and the evaporator 109. In a specific embodiment, a first end of the third expansion valve 121 is in communication with the outlet of the out-vehicle condenser 103, the first end of the second expansion valve 107, and the first end of the first solenoid valve 108. A second end of the third expansion valve 121 is in communication with an inlet of the evaporator 109. An outlet of the evaporator 109 is in communication with the inlet of the compressor 101. As shown in FIG. 16, the compressor 101, the in-vehicle condenser 102, the first expansion valve 106, the out-vehicle condenser 103, the third expansion valve 121, and the evaporator 109 form a passenger compartment refrigeration loop. It may be understood that the evaporator 109 and the third expansion valve 121 are located in the passenger compartment refrigeration loop. The third expansion valve 121 may control on/off of the passenger compartment refrigeration loop, and the first battery pack heat exchange loop, the first passenger compartment heating loop, and the passenger compartment refrigeration loop are connected in parallel to each other, thereby improving the integration level of the vehicle air conditioning system 1, and switching between different modes is flexible.

Specifically, when the temperature in the passenger compartment is high and a passenger has a refrigeration requirement, the refrigerant is pressurized by the compressor 101 to turn into a high-pressure gaseous refrigerant. The high-pressure gaseous refrigerant flows into the out-vehicle condenser 103 through the in-vehicle condenser 102 and the first expansion valve 106 (the first expansion valve 106 is in a fully-open state, and neither of the in-vehicle condenser 102 and the first expansion valve 106 performs heat exchange and throttling on the refrigerant), and transfers carried heat to the external environment to turn into a high-pressure liquid refrigerant. The high-pressure liquid refrigerant passes through the third expansion valve 121 to turn into a low-pressure liquid refrigerant. The low-pressure liquid refrigerant is inputted into the evaporator 109 to transfer the heat to the passenger compartment of the vehicle to turn into a low-pressure gaseous refrigerant in the evaporator 109 (the refrigerant absorbs heat in the passenger compartment to achieve the technical effect of refrigerating the passenger compartment), and the low-pressure gaseous refrigerant then flows back into the compressor 101.

As shown in FIG. 13, when the passenger compartment and the power battery 3 both have refrigeration requirements, the passenger compartment refrigeration loop and the first passenger compartment heating loop may be both controlled to work. To be specific, the refrigerant flowing out of the out-vehicle condenser 103 is divided into two branches. In the first passenger compartment heating loop, the refrigerant flows into the heat conducting component 105 to cool the power battery 3 and then flows into the compressor 101. In the other passenger compartment refrigeration loop, the refrigerant flows into the evaporator 109 to cool the passenger compartment and then flows into the compressor 101.

Optionally, as shown in FIG. 13, the vehicle air conditioning system 1 further includes a blower 125 and a one-way valve 124. An inlet of the one-way valve 124 is in communication with the outlet of the evaporator 109. An outlet of the one-way valve 124 is in communication with the inlet of the compressor 101. The blower 125 is arranged opposite to the evaporator 109. It may be understood that the blower 125 may blow heat released by the evaporator 109 into the passenger compartment, thereby improving the heating effect of the passenger compartment by the vehicle air conditioning system 1.

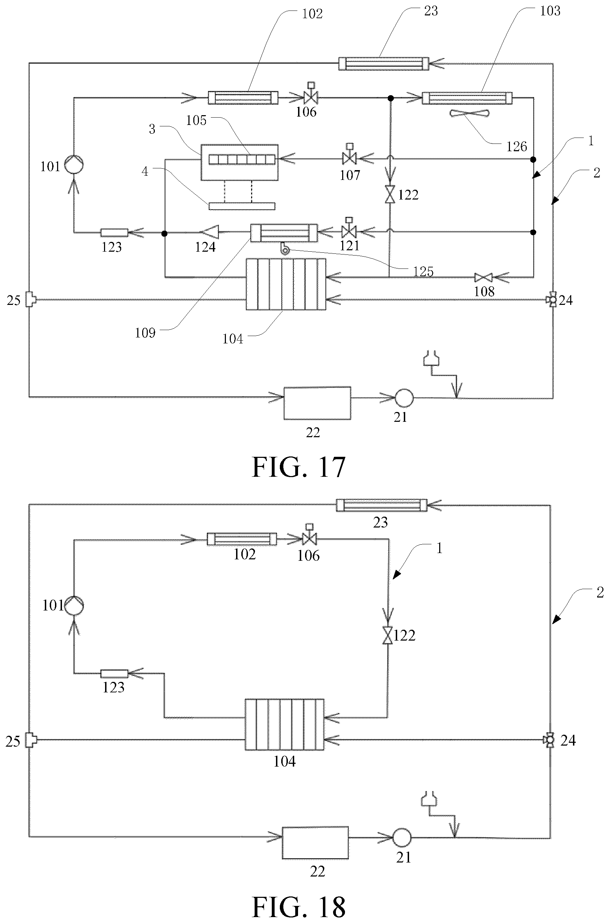

In an embodiment, as shown in FIG. 17, the vehicle air conditioning system 1 further includes a second solenoid valve 122. A first end of the second solenoid valve 122 is connected between the inlet of the out-vehicle condenser 103 and the first expansion valve 106. A second end of the second solenoid valve 122 is connected between an inlet of the heat exchanger 104 and the first solenoid valve 108. In a specific embodiment, the first end of the second solenoid valve 122 is in communication with the second end of the first expansion valve 106 and the inlet of the out-vehicle condenser 103. The second end of the second solenoid valve 122 is in communication with the second end of the first solenoid valve 108 and the inlet of the heat exchanger 104. It may be understood that as shown in FIG. 8, a branch in which the second solenoid valve 122 is located is connected in parallel to a branch in which the out-vehicle condenser 103 and the first solenoid valve 108 are located.

As shown in FIG. 18, the compressor 101, the in-vehicle condenser 102, the first expansion valve 106, the second solenoid valve 122, and the heat exchanger 104 form a third passenger compartment heating loop. Specifically, when the external environmental temperature is very low and the external environment is no longer suitable for use as a heat pump source of the vehicle air conditioning system 1, the refrigerant is pressurized by the compressor 101 to turn into a high-pressure gaseous refrigerant. After the high-pressure gaseous refrigerant performs heat exchange with the passenger compartment through the in-vehicle condenser 102, the high-pressure gaseous refrigerant is turned into a high-pressure liquid refrigerant (the refrigerant dissipates heat in the passenger compartment to achieve the technical effect of heating the passenger compartment of the vehicle). The high-pressure liquid refrigerant is depressurized by the first expansion valve 106 to turn into a low-pressure liquid refrigerant. The low-pressure liquid refrigerant flows into the heat exchanger 104 through the second solenoid valve 122. The low-pressure liquid refrigerant absorbs heat released by the vehicle high-pressure heat exchange loop 2 in the heat exchanger 104 to turn into a low-pressure gaseous refrigerant. The low-pressure gaseous refrigerant then flows back into the compressor 101. In this embodiment, the third passenger compartment heating loop may absorb heat from the vehicle high-pressure heat exchange loop 2 to heat the passenger compartment, to keep an external low-temperature environment from reducing the temperature of the refrigerant in the out-vehicle condenser 103, thereby increasing an air intake pressure of the vehicle air conditioning system 1, reducing a compression ratio of the compressor 101, and improving the energy efficiency of the vehicle air conditioning system 1.

In an embodiment, as shown in FIG. 13, the vehicle air conditioning system 1 further includes a liquid collector 123. An inlet of the liquid collector 123 is in communication with the outlet of the heat conducting component 105 and the refrigerant outlet of the heat exchanger 104. An outlet of the liquid collector 123 is in communication with the inlet of the compressor 101. The inlet of the liquid collector 123 is in communication with the outlet of the heat conducting component 105, the outlet of the evaporator 109, and an outlet of the heat exchanger 104. It may be understood that the liquid collector 123 may perform gas-liquid separation on the refrigerant, to ensure that only a gaseous refrigerant enters the compressor 101. Therefore, with the design of the liquid collector 123, while the refrigeration and heating effects of the vehicle air conditioning system 1 are ensured, the service life of the vehicle air conditioning system 1 is further extended.

In an embodiment, the heat conducting component 105 is a direct-cooling plate integrated in the power battery 3. It may be understood that the direct-cooling plate is integrated in the power battery 3, and is in full contact with a surface of the power battery 3, so that the refrigerant of the vehicle air conditioning system 1 may directly perform heat exchange (including direct evaporation and heat absorption of the refrigerant in the direct-cooling plate) with the power battery 3 in the direct-cooling plate, heat transfer stages are reduced, a heat loss is low, and heat exchange efficiency is high. In addition, the integration level of the power battery 3 is increased, the energy density of the power battery 3 is effectively increased, and the energy consumption of the whole vehicle is effectively reduced.

As shown in FIG. 13 and FIG. 17, another embodiment of the present disclosure further provides a vehicle heat management system, including a vehicle high-pressure heat exchange loop 2, a power battery 3, a self-heating circuit 4, and the foregoing vehicle air conditioning system 1. It may be understood that, the self-heating circuit 4 may self-heat the power battery 3, the vehicle high-pressure heat exchange loop 2 may be used for reducing the temperature of the vehicle high-voltage devices, the vehicle air conditioning system 1 may be used for refrigerating and heating the passenger compartment, and the like, so that the vehicle heat management system improves the comfort and reliability of the vehicle. In addition, the refrigerant may further reduce the temperature of the coolant in the vehicle high-pressure heat exchange loop 2 in the heat exchanger 104, thereby improving the cooling efficiency of the vehicle high-pressure heat exchange loop 2.

It needs to be noted that the structure, function, and the like of the vehicle high-pressure heat exchange loop 2 in Embodiment 2 are the same as the structure, function, and the like of the vehicle high-pressure heat exchange loop 2 in Embodiment 1 above. In order to reduce redundancy, details are not described herein again.

Optionally, as shown in FIG. 13, the vehicle heat management system further includes a fan 126 that is arranged opposite to both the out-vehicle condenser 103 and the heat sink 23. Through the rotation of the fan 126, the refrigerant flowing through the out-vehicle condenser 103 transfers heat to the external environment more easily, and the coolant flowing through the heat sink 23 transfers heat to the external environment more easily.

It needs to be noted that when various refrigeration and heating loops in the vehicle air conditioning system 1 and the vehicle heat management system of the present disclosure work, it is only necessary to control solenoid valves, expansion valves, and the like on a corresponding loop to be turned on and control solenoid valves, expansion valves, and the like on other loops to be turned off. In addition, through the control of the on/off of the solenoid valves and the expansion valves in the present disclosure, any one, two or more two loops may be in a working state at the same time, which also falls within the protection scope of the present disclosure.

### Embodiment 3

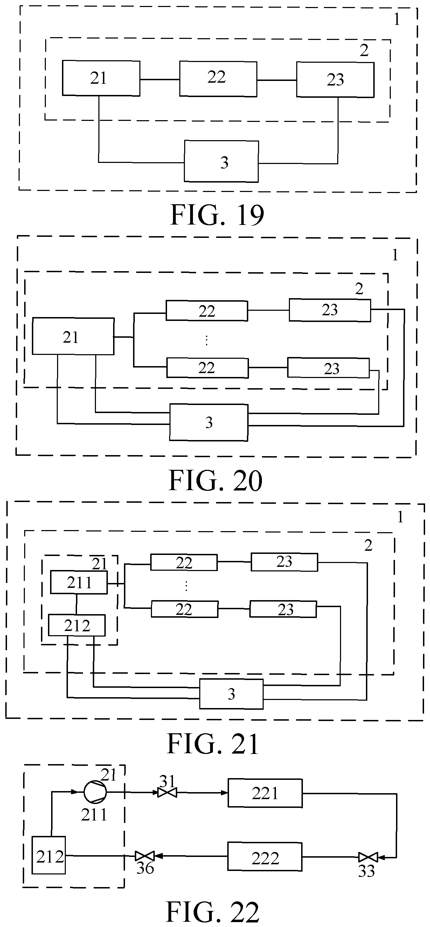

FIG. 19 is a schematic structural diagram of a heat management system with one heat exchange loop according to an embodiment of the present disclosure.

As shown in FIG. 19, the heat management system 1 includes one heat exchange loop 2 and a valve assembly 3.

FIG. 20 is a schematic structural diagram of a heat management system with one heat exchange loop according to another embodiment of the present disclosure.

As shown in FIG. 20, the heat management system 1 includes multiple heat exchange loops 2 and a valve assembly 3.

Referring to FIG. 19 and FIG. 20, each heat exchange loop 2 includes a heat pump device 21, a heat absorption heat exchanger 22, and a heat supply heat exchanger 23 which are sequentially connected in series. The heat exchange loop 2 may include the foregoing passenger compartment heating loops and/or battery pack heat exchange loops. Heat absorption and heat supply are relative. The heat absorption heat exchanger 22 is a heat exchanger that absorbs heat from the outside, and the heat supply heat exchanger 23 is a heat exchanger that supplies heat to the outside.

Referring to FIG. 20, when multiple heat exchange loops 2 are provided, the multiple heat exchange loops 2 share the heat pump device 21.

The heat absorption heat exchanger 22 includes at least one of an in-vehicle heat exchanger 221 (which may be the foregoing in-vehicle condenser 102) and a battery pack heat exchanger 222 (which may include the foregoing heat conducting component).

In some implementations, when the heat absorption heat exchanger 22 is the in-vehicle heat exchanger 221, the heat supply heat exchanger 23 includes at least one of the battery pack heat exchanger 222, an out-vehicle heat exchanger 223 (which may be the foregoing out-vehicle condenser 103), and a motor electric control assembly heat exchanger 224 (which may include the foregoing vehicle high-pressure heat exchange loop 2 and the heat exchanger connected thereto). In this implementation, the heat exchange loop 2 is used for implementing in-vehicle warming.

In some other implementations, when the heat absorption heat exchanger 22 is the battery pack heat exchanger 222, the heat supply heat exchanger 23 includes at least one of the out-vehicle heat exchanger 223 and the motor electric control assembly heat exchanger 224. In this implementation, the heat exchange loop 2 is used for implementing battery pack heating.

It should be understood that when the heat absorption heat exchanger 22 is the in-vehicle heat exchanger 221, it indicates that the heat management system 1 can implement in-vehicle warming. At least one of the battery pack heat exchanger 222, the out-vehicle heat exchanger 223, and the motor electric control assembly heat exchanger 224 may be selected as the heat supply heat exchanger 23 according to an actual case to supply heat to the in-vehicle heat exchanger 221 through the heat exchange loop 2, thereby implementing in-vehicle warming. Correspondingly, when the heat absorption heat exchanger 22 is the battery pack heat exchanger 222, it indicates that the heat management system 1 can implement battery pack heating. At least one of the out-vehicle heat exchanger 223 and the motor electric control assembly heat exchanger 224 may be selected as the heat supply heat exchanger 23 according to an actual case to supply heat to the battery pack heat exchanger 222 through the heat exchange loop 2, thereby implementing battery pack heating. It needs to be noted that the principle or process of heat exchange is described in detail in the implementations below.

In the embodiments of the present disclosure, the valve assembly 3 in the heat management system 1 is configured to implement on/off of the heat exchange loops 2.

It needs to be noted that when multiple heat exchange loops 2 are provided, for different heat exchange cases, the selection of the heat absorption heat exchanger 22 and the heat supply heat exchanger 23 may be different. In other words, for different heat exchange requirements, the on/off of the multiple heat exchange loops 2 may be different. In this embodiment, the on or off of the heat exchange loops 2 may be implemented through the valve assembly 3.

In this way, the present disclosure provides a heat management system 1 different from that in the related art. The heat exchange loop 2 is arranged, and the heat pump device 21, the heat absorption heat exchanger 22, and the heat supply heat exchanger 23 which are connected in series are arranged on the heat exchange loop 2. Heat absorbed by the heat pump device 21 from the heat supply heat exchanger 23 is transferred into the heat absorption heat exchanger 22, so that heat exchange can be completed without another heating source, thereby reducing the implementation costs of the system, and reducing a vehicle arrangement space to be occupied. In addition, the on/off of the heat exchange loops 2 is implemented by arranging the valve assembly 3 to implement in-vehicle warming and/or battery pack heating, thereby improving working flexibility.

FIG. 21 is a schematic structural diagram of a heat management system according to an example of the present disclosure.

As an example, as shown in FIG. 21, the heat pump device 21 may include a gas-liquid separator 212 and a compressor 211 which are connected in series.

Specifically, referring to FIG. 21, the compressor 211 is connected close to an input end of the heat absorption heat exchanger 22, and the gas-liquid separator 212 is connected close to an output end of the heat supply heat exchanger 23.

In actual applications, the gas-liquid separator 212 (i.e., the foregoing liquid collector) may perform condensate recovery or vapor phase purification on a gas containing a small amount of condensate. In this example, the gas-liquid separator 212 is connected in series to the compressor 211, so that a liquid impact in the compressor 211 can be prevented, and oil in the compressor 211 can be kept from being diluted by an excessive amount of refrigerant.

The compressor 211 is used as a core component of the heat pump device 21, and a fluid vapor of a low-temperature or low-pressure refrigerant that is sucked in may be compressed to increase the temperature and pressure, and output the refrigerant to another heat management component.

FIG. 22 is a partial schematic structural diagram of a heat management system according to a first specific embodiment of the present disclosure.

In some embodiments of the present disclosure, the heat absorption heat exchanger 22 includes the in-vehicle heat exchanger 221, the heat supply heat exchanger 23 includes the battery pack heat exchanger 222, and the valve assembly 3 includes a first solenoid valve 31, a second solenoid valve 33, and a third solenoid valve 36.

Referring to FIG. 22, an output end of the heat pump device 21 may be connected to an input end of the in-vehicle heat exchanger 221 by the first solenoid valve 31. An output end of the in-vehicle heat exchanger 221 is connected to a first end of the battery pack heat exchanger 222 by the second solenoid valve 33. A second end of the battery pack heat exchanger 222 is connected to an input end of the heat pump device 21 by the third solenoid valve 36. The first end of the battery pack heat exchanger 222 is an input end, and the second end of the battery pack heat exchanger 222 is an output end.

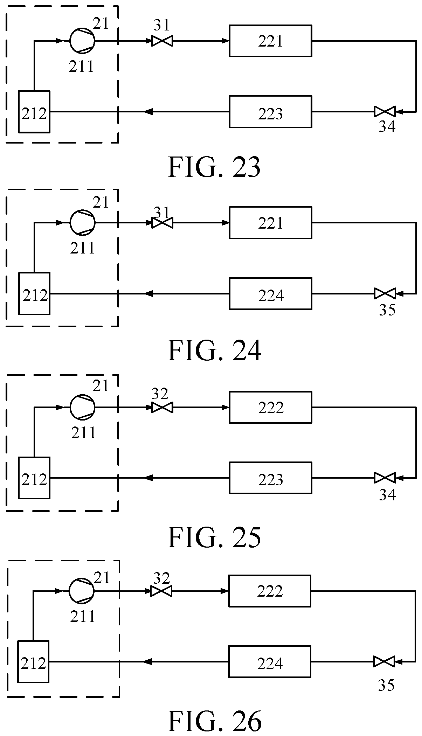

FIG. 23 is a partial schematic structural diagram of a heat management system according to a second specific embodiment of the present disclosure.

In some embodiments of the present disclosure, the heat absorption heat exchanger 22 includes the in-vehicle heat exchanger 221, the heat supply heat exchanger 23 includes the out-vehicle heat exchanger 223, and the valve assembly 3 includes the first solenoid valve 31 and a fourth solenoid valve 34.

Specifically, referring to FIG. 23, an output end of the heat pump device 21 is connected to an input end of the in-vehicle heat exchanger 221 by the first solenoid valve 31. An output end of the in-vehicle heat exchanger 221 is connected to an input end of the out-vehicle heat exchanger 223 by the fourth solenoid valve 34. An output end of the out-vehicle heat exchanger 223 is connected to an input end of the heat pump device 21.

FIG. 24 is a partial schematic structural diagram of a heat management system according to a third specific embodiment of the present disclosure.

In some embodiments of the present disclosure, the heat absorption heat exchanger 22 includes the in-vehicle heat exchanger 221, the heat supply heat exchanger 23 includes the motor electric control assembly heat exchanger 224, and the valve assembly 3 includes the first solenoid valve 31 and a fifth solenoid valve 35.

Specifically, referring to FIG. 24, an output end of the heat pump device 21 is connected to an input end of the in-vehicle heat exchanger 221 by the first solenoid valve 31. An output end of the in-vehicle heat exchanger 221 is connected to an input end of the motor electric control assembly heat exchanger 224 by the fifth solenoid valve 35. An output end of the motor electric control assembly heat exchanger 224 is connected to an input end of the heat pump device 21.

In this way, when the heat absorption heat exchanger 22 includes the in-vehicle heat exchanger 221, to meet a heat absorption requirement of the in-vehicle heat exchanger 221, at least one of the battery pack heat exchanger 222, the out-vehicle heat exchanger 223, and the motor electric control assembly heat exchanger 224 may be determined as the heat supply heat exchanger 23 to absorb at least one of heat of the out-vehicle heat exchanger 223, heat of the motor electric control assembly heat exchanger 224, and heat of the battery pack heat exchanger 222 and release the heat in the vehicle, so that in-vehicle warming can be implemented without another heating source, thereby reducing the implementation costs, and also reducing the occupation rate of an arrangement space of the vehicle.

FIG. 25 is a partial schematic structural diagram of a heat management system according to a fourth specific embodiment of the present disclosure.

In some embodiments of the present disclosure, the heat absorption heat exchanger 22 includes the battery pack heat exchanger 222, the heat supply heat exchanger 23 includes the out-vehicle heat exchanger 223, and the valve assembly 3 includes a sixth solenoid valve 32 and a fourth solenoid valve 34.

Specifically, referring to FIG. 25, an output end of the heat pump device 21 is connected to the second end of the battery pack heat exchanger 222 by the sixth solenoid valve 32. The first end of the battery pack heat exchanger 222 is connected to an input end of the out-vehicle heat exchanger 223 by the fourth solenoid valve 34. An output end of the out-vehicle heat exchanger 223 is connected to an input end of the heat pump device 21. The first end of the battery pack heat exchanger 222 is an output end, and the second end is an input end.

It should be known that a battery pack is formed by a large number of cells. A lithium battery is used for the cell. The performance of such a battery is highly susceptible to temperature. Especially in an environment with a very low temperature, a discharging process and a charging process of the battery are highly detrimental to the battery. Therefore, it is very necessary to appropriately heat the battery pack in a low-temperature environment. For example, for an electric vehicle in actual life, when the environmental temperature is very low (for example, lower than 0°C), it is necessary to appropriately heat the battery pack before the vehicle is started.

FIG. 26 is a partial schematic structural diagram of a heat management system according to a fifth specific embodiment of the present disclosure.

In some embodiments of the present disclosure, the heat absorption heat exchanger 22 includes the battery pack heat exchanger 222, the heat supply heat exchanger 23 includes the motor electric control assembly heat exchanger 224, and the valve assembly 3 includes the sixth solenoid valve 32 and the fifth solenoid valve 35.

Specifically, referring to FIG. 26, an output end of the heat pump device 21 is connected to the second end of the battery pack heat exchanger 222 by the sixth solenoid valve 32. The first end of the battery pack heat exchanger 222 is connected to an input end of the motor electric control assembly heat exchanger 224 by the fifth solenoid valve 35. An output end of the motor electric control assembly heat exchanger 224 is connected to an input end of the heat pump device 21. The first end of the battery pack heat exchanger 222 is an output end, and the second end is an input end.

In this way, when the heat absorption heat exchanger 22 includes the battery pack heat exchanger 222, to meet a heating requirement of the battery pack, at least one of the out-vehicle heat exchanger 223 and the motor electric control assembly heat exchanger 224 may be determined as the heat supply heat exchanger 23 to absorb at least one of heat of the out-vehicle heat exchanger 223 and heat of the motor electric control assembly heat exchanger 224 and provide the heat to the battery pack heat exchanger 222, so that battery pack heating can be implemented without another heating source, thereby improving the energy utilization of the whole vehicle at a low temperature. For a battery electric vehicle in actual applications, when a battery pack has sufficient heat, the mileage of the vehicle at a low temperature can be increased, thereby ensuring traveling experience.

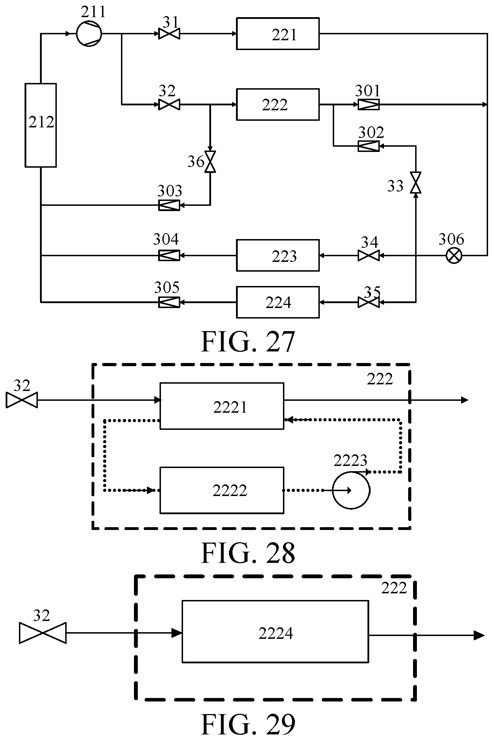

FIG. 27 is a schematic structural diagram of a heat management system according to a specific embodiment of the present disclosure.

As shown in FIG. 27, according to some embodiments of the present disclosure, the valve assembly 3 may include the first solenoid valve 31, the second solenoid valve 33, the third solenoid valve 36, the fourth solenoid valve 34, the fifth solenoid valve 35, and the sixth solenoid valve 32.

Specifically, as shown in FIG. 22 to FIG. 27, the output end of the heat pump device 21 is connected to one end of the first solenoid valve 31 to form a first node. The other end of the first solenoid valve 31 is connected to the input end of the in-vehicle heat exchanger 221. The output end of the in-vehicle heat exchanger 221 is connected to one end of the second solenoid valve 33 to form a second node. The other end of the second solenoid valve 33 is connected to the first end of the battery pack heat exchanger 222. The second end of the battery pack heat exchanger 222 is connected to one end of the third solenoid valve 36 to form a third node. The other end of the third solenoid valve 36 is connected to the input end of the heat pump device 21.

In some embodiments, the second node is further connected to one end of the fourth solenoid valve 34 and one end of the fifth solenoid valve 35. The other end of the fourth solenoid valve 34 is connected to the input end of the out-vehicle heat exchanger 223. The output end of the out-vehicle heat exchanger 223 is connected to the input end of the heat pump device 21. The other end of the fifth solenoid valve 35 is connected to the input end of the motor electric control assembly heat exchanger 224. The output end of the motor electric control assembly heat exchanger 224 is connected to the input end of the heat pump device 21. The first node is further connected to one end of the sixth solenoid valve 32. The other end of the sixth solenoid valve 32 is connected to the third node. The first end of the battery pack heat exchanger 222 is further connected to the second node.

In this way, the heat management system 1 may implement in-vehicle warming through three heat exchange loops 2, and in addition may implement battery pack heating through two heat exchange loops 2. The heat exchange loops 2 share the heat pump device 21, and the out-vehicle heat exchanger 223 and the motor electric control assembly heat exchanger 224 are reused. In addition, another heat source does not need to be additionally added, an occupation space is small, and costs are low.

As an example, as shown in FIG. 27, the valve assembly 3 may further include a first one-way valve 301, a second one-way valve 302, a third one-way valve 303, a fourth one-way valve 304, a fifth one-way valve 305, and a throttle valve 306.

Specifically, referring to FIG. 27, the first one-way valve 301 is connected between the first end of the battery pack heat exchanger 222 and the second node, and the first one-way valve 301 points away from the battery pack heat exchanger 222. The second one-way valve 302 is connected between the battery pack heat exchanger 222 and the second solenoid valve 33. The second one-way valve 302 points to the battery pack heat exchanger 222. The third one-way valve 303 is connected between the third solenoid valve 36 and the input end of the heat pump device 21. The third one-way valve 303 points to the heat pump device 21. The fourth one-way valve 304 is connected between the output end of the out-vehicle heat exchanger 223 and the input end of the heat pump device 21. The fourth one-way valve 304 points to the heat pump device 21. The fifth one-way valve 305 is connected between the output end of the motor electric control assembly heat exchanger 224 and the input end of the heat pump device 21. The fifth one-way valve 305 points to the heat pump device 21.

In this example, the one-way valve is used for keeping an oil flow from flowing reversely and/or keeping compressed air from flowing oppositely.

As a feasible implementation, referring to FIG. 27, one end of the throttle valve 306 is connected to the first one-way valve 301 and the output end of the in-vehicle heat exchanger 221, and the other end of the throttle valve 306 is connected to the second node.

In this implementation, the throttle valve 306 is used for controlling flow rates of fluids in the heat exchange loops 2, to implement the control of the amount, speed, and the like of energy to be transferred.

FIG. 28 is a schematic structural diagram of a battery pack heat exchanger according to an example of the present disclosure.

As shown in FIG. 28, as an example, the battery pack heat exchanger 222 may include a plate heat exchanger 2221, a battery pack liquid-cooling heat exchange plate 2222, and a water pump 2223.

The plate heat exchanger 2221 has a first flow path and a second flow path. The first flow path is connected to a corresponding heat exchange loop 2. The second flow path is connected in series to the battery pack liquid-cooling heat exchange plate 2222 and the water pump 2223.

Optionally, in actual applications, to facilitate the control of the heat management system 1, a temperature sensor, a flow sensor, and other components are added to the flow paths, to monitor and adjust the temperature and flow rate of a refrigerant in a corresponding path at any time.

FIG. 29 is a schematic structural diagram of a battery pack heat exchanger according to another example of the present disclosure.

As shown in FIG. 29, as another example, the battery pack heat exchanger 222 may include a battery pack direct-cooling direct-heating heat exchange plate 2224.

Specifically, the battery pack direct-cooling direct-heating heat exchange plate 2224 is connected to a corresponding heat exchange loop 2.

Optionally, to facilitate the control of the heat management system 1, a throttle valve, a pressure sensor, a temperature sensor, and other components may be further added to the flow paths.

Therefore, the heat management system 1 provided in the embodiments of the present disclosure can be used in a battery pack liquid-cooling system, and may be used in a battery pack direct-cooling direct-heating system. Different installation manners may be selected according to different actual cases, so that the system has strong applicability.

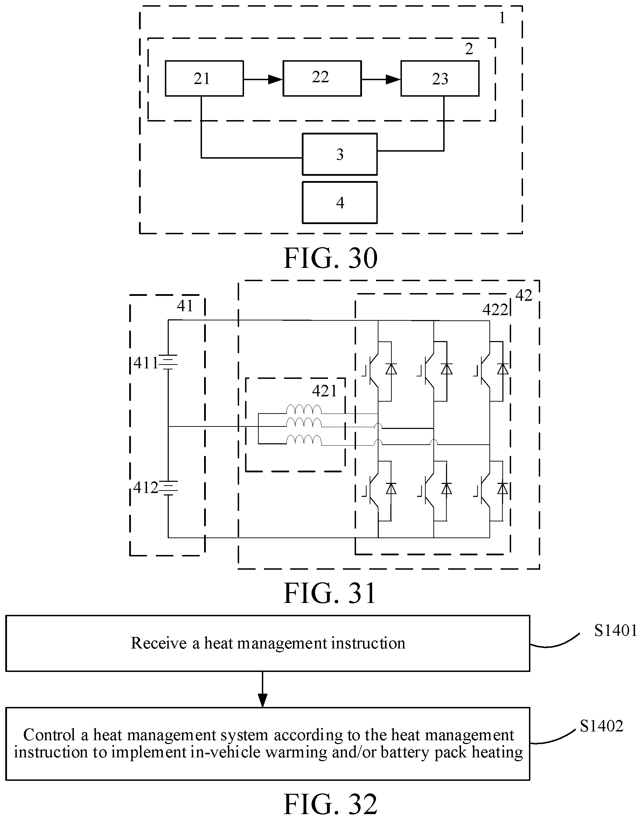

FIG. 30 is a schematic structural diagram of a heat management system according to another embodiment of the present disclosure.

In some embodiments of the present disclosure, as shown in FIG. 12, the heat management system 1 may further include a battery pack self-heating device 4.

FIG. 31 is a schematic structural diagram of a battery pack self-heating device according to an example of the present disclosure.

As an example, referring to FIG. 31, the battery pack self-heating device 4 may include a battery pack 41 and a motor electric control assembly 42.

The battery pack 41 (i.e., the power battery 3 in Embodiment 1 and Embodiment 2 above) may include a first cell group 411 and a second cell group 412 which are connected in series. The motor electric control assembly 42 may include a motor 421 and a motor controller 422.

Specifically, as shown in FIG. 31, positive and negative buses of the motor controller 422 are respectively correspondingly connected to positive and negative electrodes of the battery pack 41. Ends of three-phase coils of the motor 421 are respectively correspondingly connected to midpoints of three-phase bridge arms of the motor controller 422. The other ends of the three-phase coils being all connected to a series connection point between the first cell group 411 and the second cell group 412.

For example, in the battery pack self-heating device 4, when the motor controller 422 controls switching frequencies of the three-phase bridge arms of the motor controller 422 according to a certain frequency. A high-frequency alternating current flows through a connecting wire harness. The first cell group 411 and the second cell group 412 in the battery pack 41 may perform charging and discharging with high-frequency oscillation, to trigger the self-heating of the battery pack 41.

In addition, in some implementations, a part of heat generated from the self-heating of the battery pack 41 may further be transferred to the battery pack liquid-cooling heat exchange plate 2222 or the battery pack direct-cooling direct-heating heat exchange plate 2224 provided in the foregoing example of the present disclosure through a heat conducting structure.

For example, the battery pack liquid-cooling heat exchange plate 2222 may be joined to a cell group through the heat conducting structure (for example, a heat conducting structure adhesive or a heat conducting gel), to implement heat exchange between the battery pack liquid-cooling heat exchange plate 2222 and the cell group. Alternatively, the battery pack direct-cooling direct-heating heat exchange plate 2224 may be joined to a cell group through the heat conducting structure, to implement heat exchange between the battery pack direct-cooling direct-heating heat exchange plate 2224 and the cell group.

In this way, in a working process of the battery pack self-heating device 4, the self-heating of the battery pack 41 may be triggered, and temperature balancing between different cell groups inside the battery pack 41 and between different cells inside a cell group, thereby improving the balance of heat exchange on the heat exchange loops 2.

In some implementations, because the flowing high-frequency alternating current passes through the motor 421 and the three-phase bridge arms of the motor controller 422, the motor 421 and the motor controller 422 also generate some heat. Through a cooling loop of the motor electric control assembly 42, the heat generated by the motor 421 and the motor controller 422 is transferred to the motor electric control assembly heat exchanger 224. When an in-vehicle passenger compartment has a warming requirement, the heat pump device 21 may absorb heat from the motor electric control assembly heat exchanger 224, and residual heat generated in a running process of the motor electric control assembly 42 is transferred to the in-vehicle passenger compartment to implement in-vehicle warming, to mitigate the deficiency that an in-vehicle passenger compartment has an insufficient heat absorption capability in a low-temperature environment in the heat management system 1 in the related art, thereby improving the energy utilization of the whole vehicle at a low temperature, and reducing energy consumption. For a battery electric vehicle in actual life, the mileage of the vehicle at a low temperature can be further increased.

In addition, due to the enhanced cooling capability of the motor electric control assembly 42, the over-current capability is improved, which helps to increase a current in a heating process of the battery pack self-heating device 4, thereby improving the self-heating energy efficiency of the battery pack. In addition, under an equivalent self-heating current condition, due to the enhanced cooling capability of the motor electric control assembly 42, an over-current area of the motor electric control assembly 42 can be correspondingly reduced, which helps to reduce the weight of the motor electric control assembly 42, thereby further reducing the implementation costs of the heat management system 1.

In addition, in some embodiments, in a low-temperature environment, when it is detected that the motor electric control assembly 42 has a high temperature and a lot of residual heat, even if the battery pack 41 does not have a heating requirement at a current moment, the heat management system 1 provided in the embodiments of the present disclosure can intelligently detect the temperature of the battery pack 41, and in a case that the temperature of the battery pack 41 is not excessively high, residual heat generated during the running of the motor electric control assembly 42 is transferred to the battery pack to reheat the battery pack 41 to increase the temperature of the battery pack 41, thereby improving the charging and discharging performance of the battery pack 41 at a low temperature, appropriately distributing a heat source, and reducing the energy consumption of the whole vehicle. For a battery electric vehicle in actual life, the mileage of the vehicle at a low temperature can be further increased.

In summary, in the heat management system 1 provided in the embodiments of the present disclosure, the battery pack heat exchanger 222, the out-vehicle heat exchanger 223, and the motor electric control assembly heat exchanger 224 are arranged, so that in-vehicle warming and/or battery pack heating can be implemented without another heating source, thereby improving the energy utilization of the whole vehicle at a low temperature, reducing energy consumption, and also reducing the implementation costs of the system. In addition, the battery pack heat exchanger 222 provided in the embodiments of the present disclosure may be used in a battery pack liquid-cooling system, and may be used in a battery pack direct-cooling direct-heating system, so that the heat management system 1 has strong applicability. In addition, the battery pack self-heating device 4 is arranged, so that while the self-heating of the battery pack is triggered, the balance of heat exchange on the heat exchange loops 2 is ensured, thereby further improving the working safety and reliability of the heat management system 1.

The present disclosure further provides a control method for a heat management system, which may be used in the heat management systems provided in the foregoing embodiments of the present disclosure.

FIG. 32 is a flowchart of a control method for a heat management system according to an embodiment of the present disclosure.

As shown in FIG. 32, the control method for a heat management system may include the following steps.

S1401: Receive a heat management instruction.

S1402: Control a heat management system according to the heat management instruction to implement in-vehicle warming and/or battery pack heating.

Specifically, when different heat management instructions are received, control methods for a heat management system are different. For example, when the heat management instruction is in-vehicle warming, in-vehicle warming may be implemented through a corresponding heat exchange loop in the heat management system. For another example, when the heat management instruction is battery pack heating, battery pack heating may be implemented through a corresponding heat exchange loop in the heat management system. For still another example, when the heat management instruction is in-vehicle warming and battery pack heating, in-vehicle warming and battery pack heating may be implemented through a corresponding heat exchange loop in the heat management system, and battery pack heating may be implemented through the battery pack self-heating device in the heat management system. In this way, various heat exchange and heating requirements can be met.

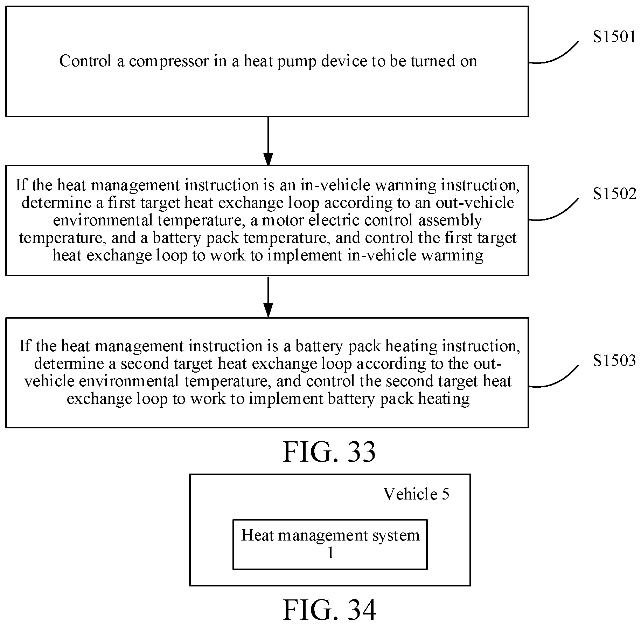

FIG. 33 is a flowchart of Step S1402 in a control method for a heat management system according to an embodiment of the present disclosure.

As shown in FIG. 33, the controlling a heat management system according to the heat management instruction to implement in-vehicle warming and/or battery pack heating may include the following steps.

S1501: Control a compressor in a heat pump device to be turned on.

S1502: If the heat management instruction is an in-vehicle warming instruction, determine a first target heat exchange loop according to an out-vehicle environmental temperature, a motor electric control assembly temperature, and a battery pack temperature, and control the first target heat exchange loop to work to implement in-vehicle warming.

In some embodiments, the determining a first target heat exchange loop according to an out-vehicle environmental temperature, a motor electric control assembly temperature, and a battery pack temperature may include the following steps. If the out-vehicle environmental temperature is greater than or equal to a first preset temperature, it is determined that the first target heat exchange loop is a first heat exchange loop, where the first heat exchange loop is a heat exchange loop in which the in-vehicle heat exchanger and the out-vehicle heat exchanger are located.

In other words, when the out-vehicle environmental temperature is greater than or equal to the first preset temperature, it indicates that an in-vehicle environmental condition at a current moment can meet an in-vehicle warming requirement. The heat management system in the foregoing embodiments of the present disclosure is controlled to turn on the first heat exchange loop (in other words, a heat exchange loop in which the in-vehicle heat exchanger and the out-vehicle heat exchanger are located) and turn off other heat exchange loops. Referring to FIG. 27, the first solenoid valve 31 and the fourth solenoid valve 34 are controlled to be turned on, and other solenoid valves are controlled to be turned off.

For example, in a low-temperature environment, when the heat management instruction is an in-vehicle warming instruction, indicating that in this case the in-vehicle passenger compartment has a heat absorption requirement, and it is detected at the same time that the out-vehicle environmental temperature is greater than or equal to the first preset temperature, meeting a heat supply condition, the heat management system in the foregoing embodiments may be controlled to absorb heat in the out-vehicle heat exchanger, and the heat is released in the passenger compartment to meet the heat absorption requirement of the in-vehicle passenger compartment, so as to complete exchange of heat between the inside and outside of the vehicle, thereby implementing in-vehicle warming.

If the out-vehicle environmental temperature is less than the first preset temperature, or the out-vehicle environmental temperature is less than a second preset temperature in a working process of the first heat exchange loop, the first target heat exchange loop is determined according to the motor electric control assembly temperature and the battery pack temperature, where the second preset temperature is less than the first preset temperature.

In other words, when the out-vehicle environmental temperature cannot meet or no longer meets the in-vehicle warming requirement, the first target heat exchange loop may be determined or reselected according to the motor electric control assembly temperature and the battery pack temperature.

Optionally, the first preset temperature and the second preset temperature are determined according to actual heat exchange capabilities of the heat management system at different environmental temperatures and an in-vehicle warming requirement.

As an example, if the out-vehicle environmental temperature is greater than or equal to the second preset temperature in the working process of the first heat exchange loop, it indicates that the heat management system can still absorb sufficient heat from the environment. In this case, the current solenoid valves (i.e., the first solenoid valve 31 and the fourth solenoid valve 34) are kept in an on state, and when a warming turn-off command is received, the compressor is controlled to be turned off, the first solenoid valve 31 and the fourth solenoid valve 34 return to an off state, and the warming of the passenger compartment is turned off.

In some embodiments, if the out-vehicle environmental temperature is less than the first preset temperature, or the out-vehicle environmental temperature is less than a second preset temperature in a working process of the first heat exchange loop, the determining the first target heat exchange loop according to the motor electric control assembly temperature and the battery pack temperature may include: if the motor electric control assembly temperature is greater than a third preset temperature, determining that the first target heat exchange loop is a second heat exchange loop, where the second heat exchange loop is a heat exchange loop in which the in-vehicle heat exchanger and the motor electric control assembly heat exchanger are located.

In other words, when the out-vehicle environmental temperature is less than the first preset temperature, or the out-vehicle environmental temperature is less than the second preset temperature in the working process of the first heat exchange loop, it indicates that the in-vehicle environmental condition at the current moment cannot meet the in-vehicle warming requirement. However, in this case, when it is detected that the motor electric control assembly temperature is greater than the third preset temperature, it indicates that heat of the motor electric control assembly at the current moment can meet the in-vehicle warming requirement. The heat management system in the foregoing embodiments of the present disclosure may be controlled to turn on the second heat exchange loop (in other words, a heat exchange loop in which the in-vehicle heat exchanger and the motor electric control assembly heat exchanger are located) and turn off other heat exchange loops. Referring to FIG. 27, the first solenoid valve 31 and the fifth solenoid valve 35 are controlled to be turned on, and other solenoid valves are controlled to be turned off.

For example, in a low-temperature environment, when the heat management instruction is an in-vehicle warming instruction, and the out-vehicle environmental temperature does not meet a heat supply condition, but it is detected that the motor electric control assembly temperature is greater than the third preset temperature, meeting the heat supply condition, the heat management system in the foregoing embodiments may be controlled to absorb heat in the motor electric control assembly, and the heat is released in the passenger compartment to meet the heat absorption requirement of the passenger compartment, thereby implementing in-vehicle warming.

If the motor electric control assembly temperature is less than the third preset temperature, or the motor electric control assembly temperature is less than a fourth preset temperature in a working process of the second heat exchange loop, the first target heat exchange loop is determined according to the battery pack temperature, where the fourth preset temperature is less than the third preset temperature.

In other words, when the out-vehicle environmental temperature cannot meet or no longer meets the in-vehicle warming requirement, and at the same time it is determined that the motor electric control assembly temperature at the current moment cannot meet or no longer meets the in-vehicle warming requirement, the first target heat exchange loop may be determined or reselected according to the battery pack temperature.

Optionally, the third preset temperature and the fourth preset temperature are determined according to actual heat exchange capabilities of the motor electric control assembly at different environmental temperatures and an in-vehicle warming requirement.

As an example, if the motor electric control assembly temperature is greater than or equal to the fourth preset temperature in the working process of the second heat exchange loop, it indicates that the heat management system can still absorb sufficient heat from the motor electric control assembly. In this case, the current solenoid valves (i.e., the first solenoid valve 31 and the fifth solenoid valve 35) are kept in an on state, and when a warming turn-off command is received, the compressor is controlled to be turned off, the first solenoid valve 31 and the fifth solenoid valve 35 return to an off state, and the warming of the passenger compartment is turned off.

In some embodiments, if the motor electric control assembly temperature is less than the third preset temperature, or the motor electric control assembly temperature is less than a fourth preset temperature in a working process of the second heat exchange loop, the determining the first target heat exchange loop according to the battery pack temperature may include: if the battery pack temperature is greater than or equal to a fifth preset temperature, determining that the first target heat exchange loop is a third heat exchange loop, where the third heat exchange loop is a heat exchange loop in which the in-vehicle heat exchanger and the battery pack heat exchanger are located.

In other words, when the out-vehicle environmental temperature is less than the first preset temperature, or the out-vehicle environmental temperature is less than the second preset temperature in the working process of the first heat exchange loop, it indicates that the in-vehicle environmental condition at the current moment cannot meet the in-vehicle warming requirement. In addition, when the motor electric control assembly temperature is less than the third preset temperature, or the motor electric control assembly temperature is less than the fourth preset temperature in the working process of the second heat exchange loop, it indicates that the running heat of the motor electric control assembly at the current moment also cannot meet the in-vehicle warming requirement.

However, in this case, when it is detected that the battery pack temperature (which may be the lowest temperature in detected temperatures at multiple positions of the battery pack) is greater than or equal to the fifth preset temperature, it indicates that the temperature of the battery pack at the current moment can meet the in-vehicle warming requirement. The heat management system in the foregoing embodiments of the present disclosure may be controlled to turn on the third heat exchange loop (in other words, a heat exchange loop in which the in-vehicle heat exchanger and the battery pack heat exchanger are located) and turn off other heat exchange loops. Referring to FIG. 27, the first solenoid valve 31, the second solenoid valve 33, and the third solenoid valve 36 are controlled to be turned on, and other solenoid valves are controlled to be turned off.

For example, in a low-temperature environment, when the heat management instruction is an in-vehicle warming instruction, and neither of the out-vehicle environmental temperature and the motor electric control assembly temperature meets a heat supply condition, but it is detected in this case that the battery pack temperature is greater than or equal to the fifth preset temperature, meeting the heat supply condition, the heat management system in the foregoing embodiments may be controlled to absorb heat of the battery pack, and the heat is released in the passenger compartment to meet the heat absorption requirement of the passenger compartment, thereby implementing in-vehicle warming.

If the battery pack temperature is less than the fifth preset temperature, or the battery pack temperature is less than a sixth preset temperature in a working process of the third heat exchange loop, it is determined that the first target heat exchange loop includes the second heat exchange loop and the third heat exchange loop, where the sixth preset temperature is less than the fifth preset temperature.

Optionally, in a case that it is necessary to ensure that the battery pack has sufficient charging and discharging performance, the fifth preset temperature and the sixth preset temperature are determined according to actual heat exchange capabilities of the battery pack heat exchanger at different environmental temperatures and an in-vehicle warming requirement.

As an example, if the battery pack temperature is greater than or equal to the sixth preset temperature in the working process of the third heat exchange loop, it indicates that the heat management system can still absorb sufficient heat from the battery pack. The current solenoid valves (i.e., the first solenoid valve 31, the second solenoid valve 33, and the third solenoid valve 36) are kept in an on state, and when a warming turn-off command is received, the compressor is controlled to be turned off, the first solenoid valve 31, the second solenoid valve 33, and the third solenoid valve 36 are turned off, and other solenoid valves remain off. If the battery pack heat exchanger is a battery liquid-cooling system, the water pump further needs to be controlled to stop rotating, to turn off warming of the passenger compartment.

In this way, after the in-vehicle warming instruction is received, an appropriate heat exchange loop is selected as the first target heat exchange loop according to the out-vehicle environmental temperature, the motor electric control assembly temperature, and the battery pack temperature at the current moment, and the determined heat exchange loop may be controlled to work to implement in-vehicle warming.

It needs to be noted that in some embodiments, the heat management system may further include a battery pack self-heating device. If the battery pack temperature is less than the fifth preset temperature, or the battery pack temperature is less than the sixth preset temperature in the working process of the third heat exchange loop, the battery pack self-heating device is controlled to work.

In communication with the heat management system in the foregoing embodiments of the present disclosure, because the battery pack self-heating device includes a battery pack and a motor electric control assembly, correspondingly, when the battery pack self-heating device works, it is necessary to turn on both the second heat exchange loop (in other words, the heat exchange loop in which the in-vehicle heat exchanger and the motor electric control assembly heat exchanger are located) and the third heat exchange loop (in other words, the heat exchange loop in which the in-vehicle heat exchanger and the battery pack heat exchanger are located), and other heat exchange loops are turned off. In this way, it may be determined that the first target heat exchange loop includes the second heat exchange loop and the third heat exchange loop.

If the battery pack temperature is less than a seventh preset temperature and the motor electric control assembly temperature is greater than or equal to the third preset temperature in a simultaneous working process of the second heat exchange loop and the third heat exchange loop, all the battery pack self-heating device, the second heat exchange loop, and the third heat exchange loop are controlled to stop working, and the process returns to the step of determining the first target heat exchange loop according to the motor electric control assembly temperature and the battery pack temperature.

Optionally, the seventh preset temperature is a battery pack protection temperature, used for avoiding over-temperature of the battery pack after the self-heating of the battery pack is triggered.

In other words, in a working process of the battery pack self-heating device, the second heat exchange loop and the third heat exchange loop work simultaneously. When the battery pack temperature (which may be the highest temperature in temperatures at multiple detection points of the battery pack) is less than the seventh preset temperature and the motor electric control assembly temperature is greater than or equal to the third preset temperature, it indicates that in this case, the motor electric control assembly temperature can already meet the in-vehicle warming requirement. To avoid the over-temperature of the battery pack, it is not necessary to continue to perform the self-heating work of the battery pack, the battery pack self-heating device is controlled to stop working.

As an example, if the battery pack temperature is greater than or equal to the seventh preset temperature in the simultaneous working process of the second heat exchange loop and the third heat exchange loop, all the battery pack self-heating device, the second heat exchange loop, and the third heat exchange loop are controlled to stop working, and the process returns to the step of determining the first target heat exchange loop according to the motor electric control assembly temperature and the battery pack temperature.

As still another example, if the battery pack temperature remains less than the seventh preset temperature and the motor electric control assembly temperature remains less than the third preset temperature in the simultaneous working process of the second heat exchange loop and the third heat exchange loop, it is determined that the motor electric control assembly temperature is low, the heat pump system still needs to absorb heat from the battery pack, and the current solenoid valves (i.e., the first solenoid valve 31, the second solenoid valve 33, the third solenoid valve 36, and the fifth solenoid valve 35) are kept in an on state. When the warming turn-off command is received, battery self-heating stops, the first solenoid valve 31, the second solenoid valve 33, the third solenoid valve 36, and the fifth solenoid valve 35 are turned off, and the other solenoid valves remain off. If the battery pack heat exchanger is a battery liquid-cooling system, the water pump stops rotating, the compressor is controlled to be turned off, to turn off the warming of the passenger compartment.

In this way, after the in-vehicle warming instruction is received, in a case that none of the out-vehicle environmental temperature, the motor electric control assembly temperature, and the battery pack temperature can meet a heat exchange requirement, the battery pack self-heating device is controlled to work, thereby implementing in-vehicle warming.

S1503: If the heat management instruction is a battery pack heating instruction, determine a second target heat exchange loop according to the out-vehicle environmental temperature, and control the second target heat exchange loop to work to implement battery pack heating.

In some embodiments, the determining a second target heat exchange loop according to the out-vehicle environmental temperature may include: if the out-vehicle environmental temperature is greater than or equal to an eighth preset temperature, determining that the second target heat exchange loop is a fourth heat exchange loop, where the fourth heat exchange loop is a heat exchange loop in which the battery pack heat exchanger and the out-vehicle heat exchanger are located.

In other words, when the out-vehicle environmental temperature is greater than or equal to the eighth preset temperature, it indicates that an in-vehicle environmental condition at a current moment can meet a heating requirement of the battery pack. The heat management system in the foregoing embodiments of the present disclosure is controlled to turn on the fourth heat exchange loop (in other words, a heat exchange loop in which the battery pack heat exchanger and the out-vehicle heat exchanger are located) and turn off other heat exchange loops. Referring to FIG. 27, the sixth solenoid valve 32 and the fourth solenoid valve 34 are controlled to be turned on, and other solenoid valves are controlled to be turned off.

For example, in a low-temperature environment, when the heat management instruction is a battery pack heating instruction, indicating that in this case the battery pack has a heating requirement, and it is detected at the same time that the out-vehicle environmental temperature is greater than or equal to the eighth preset temperature, meeting a heating condition, the heat management system in the foregoing embodiments may be controlled to absorb heat in the out-vehicle heat exchanger, and the heat is provided to the battery pack heat exchanger, thereby implementing battery pack heating.

If the out-vehicle environmental temperature is less than the eighth preset temperature, or the out-vehicle environmental temperature is less than a ninth preset temperature in a working process of the fourth heat exchange loop, it is determined that the second target heat exchange loop is a fifth heat exchange loop, where the ninth preset temperature is less than the eighth preset temperature, and the fifth heat exchange loop is a heat exchange loop in which the battery pack heat exchanger and the motor electric control assembly heat exchanger are located.

In other words, when the out-vehicle environmental temperature cannot meet or no longer meets the heating requirement of the battery pack, in this case, the battery pack may be heated by using residual heat generated in the running process of the motor electric control assembly. The heat management system in the foregoing embodiments of the present disclosure is controlled to turn on the fifth heat exchange loop (in other words, a heat exchange loop in which the battery pack heat exchanger and the motor electric control assembly heat exchanger are located) and turn off other heat exchange loops. Referring to FIG. 27, the fifth solenoid valve 35 and the sixth solenoid valve 32 are controlled to be turned on, and other solenoid valves are controlled to be turned off.

Optionally, the eighth preset temperature and the ninth preset temperature are determined according to actual heat exchange capabilities of the heat management system and the heating requirement of the battery pack.

For example, in a low-temperature environment, when the heat management instruction is a battery pack heating instruction and the out-vehicle environmental temperature does not meet the heat absorption requirement, the heat management system in the foregoing embodiments of the present disclosure may be controlled to absorb heat of the motor electric control assembly, and the heat is provided to the battery pack heat exchanger, thereby implementing battery pack heating.

As an example, if the out-vehicle environmental temperature is greater than or equal to the ninth preset temperature in the working process of the fourth heat exchange loop, it is determined that the heat management system can still absorb sufficient heat from the environment. The current solenoid valves are kept in an on state, and when a battery pack heating turn-off command is received, the compressor is controlled to be turned off, the sixth solenoid valve 32 and the fourth solenoid valve 34 return to an off state, and the battery pack heating is turned off.

In this way, after the battery pack heating instruction is received, a corresponding heat exchange loop is selected as the second target heat exchange loop according to different out-vehicle environmental temperatures and motor electric control assembly temperatures at the current moment, and the determined heat exchange loop may be controlled to work to implement battery pack heating.

It needs to be noted that in some embodiments, the heat management system may further include a battery pack self-heating device. If the motor electric control assembly temperature is less than or equal to a tenth preset temperature, or the motor electric control assembly temperature is less than an eleventh preset temperature in a working process of the fifth heat exchange loop, the battery pack self-heating device is controlled to work.

The eleventh preset temperature is less than the tenth preset temperature.

Optionally, the tenth preset temperature and the eleventh preset temperature are determined according to actual heat exchange capabilities of the motor electric control assembly and the heating requirement of the battery pack.

In other words, when the out-vehicle environmental temperature cannot meet or no longer meets the heating requirement of the battery pack, and at the same time the motor electric control assembly temperature is less than or equal to the tenth preset temperature, or the motor electric control assembly temperature is less than the eleventh preset temperature in the working process of the fifth heat exchange loop, it indicates that in this case residual heat generated during the running of the motor electric control assembly cannot meet the heating requirement of the battery pack. To improve the charging and discharging performance of the battery pack in a low-temperature environment and the mileage of the vehicle, in this case, the battery pack self-heating device may be controlled to start working.

As an example, if the motor electric control assembly temperature is greater than or equal to the eleventh preset temperature in the working process of the fifth heat exchange loop, it is determined that the heat management system can still absorb sufficient heat from the motor electric control assembly. The current solenoid valves are kept in an on state, and when a battery pack heating turn-off command is received, the compressor is controlled to be turned off, the fifth solenoid valve 35 and the sixth solenoid valve 32 return to an off state, and the battery pack heating is turned off.

In this way, after the battery pack heating instruction is received, in a case that neither of the out-vehicle environmental temperature and the motor electric control assembly temperature can meet a heat exchange requirement, the battery pack self-heating device is controlled to work, thereby implementing battery pack heating.

The present disclosure further provides a vehicle.

FIG. 34 is a schematic structural diagram of a vehicle according to an embodiment of the present disclosure.

As shown in FIG. 34, the vehicle 5 includes the heat management system 1 provided in Embodiment 1, Embodiment 2, and Embodiment 3 above of the present disclosure.

In addition, other structures and functions of the vehicle 5 in the embodiments of the present disclosure are known to a person skilled in the art. In order to reduce redundancy, details are not described herein again.

In the descriptions of this specification, descriptions such as reference terms "an embodiment", "some embodiments", "example", "specific example", or "some examples" intend to indicate that specific features, structures, materials, or characteristics described with reference to embodiments or examples are included in at least one embodiment or example of the present disclosure. In this specification, schematic descriptions of the foregoing terms are not necessarily directed at a same embodiment or example. Moreover, the specific features, structures, materials, or characteristics described may be combined in any one or more embodiments or examples in an appropriate manner.

Although the embodiments of the present disclosure are shown and described above, it can be understood that the foregoing embodiments are exemplary, and cannot be construed as a limitation to the present disclosure. Within the scope of the present disclosure, a person of ordinary skill in the art may make changes, modifications, replacement, and variations to the foregoing embodiments.

## Claims

**1.** A vehicle air conditioning system, comprising: a first passenger compartment heating loop and a first battery pack heat exchange loop, the first passenger compartment heating loop and the first battery pack heat exchange loop sharing a compressor and an out-vehicle condenser, the first passenger compartment heating loop further comprising an in-vehicle condenser, the first battery pack heat exchange loop further comprising a heat conducting component connected to a power battery;
the power battery being connected to a self-heating circuit used for self-heating the power battery; and an outlet of the compressor being in communication with an inlet of the in-vehicle condenser, an outlet of the in-vehicle condenser being in communication with an inlet of the out-vehicle condenser, and an outlet of the out-vehicle condenser being in communication with an inlet of the compressor.

**2.** The vehicle air conditioning system according to claim 1, wherein the first battery pack heat exchange loop further comprises a first solenoid valve;
the outlet of the compressor is in communication with a first end of the first solenoid valve, and a second end of the first solenoid valve is in communication with the inlet of the out-vehicle condenser through the heat conducting component;
the compressor, the in-vehicle condenser, and the out-vehicle condenser form the first passenger compartment heating loop; and
the compressor, the first solenoid valve, the heat conducting component, and the out-vehicle condenser form the first battery pack heat exchange loop.

**3.** The vehicle air conditioning system according to claim 1, wherein the first passenger compartment heating loop further comprises a heat exchanger in communication with a vehicle high-pressure heat exchange loop;
the outlet of the out-vehicle condenser is in communication with an inlet of the heat conducting component and a refrigerant inlet of the heat exchanger, and an outlet of the heat conducting component and a refrigerant outlet of the heat exchanger are both in communication with the inlet of the compressor;
the compressor, the in-vehicle condenser, the out-vehicle condenser, and the heat conducting component form the first battery pack heat exchange loop; and
the compressor, the in-vehicle condenser, the out-vehicle condenser, and the heat exchanger form the first passenger compartment heating loop.

**4.** The vehicle air conditioning system according to claim 2 or 3, wherein the heat conducting component comprises a direct-cooling plate integrated in the power battery.

**5.** The vehicle air conditioning system according to claim 2, further comprising a first expansion valve and an evaporator, the outlet of the out-vehicle condenser being in communication with the inlet of the compressor sequentially through the first expansion valve and the evaporator; and
the compressor, the in-vehicle condenser, the out-vehicle condenser, the first expansion valve, and the evaporator forming a passenger compartment refrigeration loop.

**6.** The vehicle air conditioning system according to claim 2, further comprising a second expansion valve, a third expansion valve, a first one-way valve, a second one-way valve, a third one-way valve, a fourth one-way valve, a second solenoid valve, and a third solenoid valve;
the outlet of the in-vehicle condenser being in communication with the inlet of the out-vehicle condenser through the second expansion valve; the outlet of the out-vehicle condenser being in communication with the inlet of the compressor through the second solenoid valve; the second end of the first solenoid valve being in communication with the inlet of the compressor through the third solenoid valve; and a first end of the heat conducting component being in communication between the first solenoid valve and the third solenoid valve, a second end of the heat conducting component being in communication with an inlet of the first one-way valve, an outlet of the first one-way valve being in communication with an inlet of the second one-way valve through the third expansion valve, an outlet of the second one-way valve being in communication between the second expansion valve and the inlet of the out-vehicle condenser, the outlet of the out-vehicle condenser being in communication with an inlet of the third one-way valve, an outlet of the third one-way valve being in communication with an inlet of the fourth one-way valve through the third expansion valve, and an outlet of the fourth one-way valve being in communication with the second end of the heat conducting component;
the compressor, the in-vehicle condenser, the second expansion valve, the out-vehicle condenser, the third one-way valve, the third expansion valve, the fourth one-way valve, the heat conducting component, and the third solenoid valve forming a battery pack temperature reduction loop;
the first battery pack heat exchange loop being formed by the compressor, the first solenoid valve, the heat conducting component, the first one-way valve, the third expansion valve, the second one-way valve, the out-vehicle condenser, and the second solenoid valve; and
the first passenger compartment heating loop being formed by the compressor, the in-vehicle condenser, the second expansion valve, the out-vehicle condenser, and the second solenoid valve.

**7.** The vehicle air conditioning system according to claim 6, further comprising a heat exchanger in communication with a vehicle high-pressure heat exchange loop, and the second solenoid valve being in communication with the inlet of the compressor through the heat exchanger;
the first passenger compartment heating loop being formed by the compressor, the in-vehicle condenser, the second expansion valve, the out-vehicle condenser, the second solenoid valve, and the heat exchanger; and
the first battery pack heat exchange loop being formed by the compressor, the first solenoid valve, the heat conducting component, the first one-way valve, the third expansion valve, the second one-way valve, the out-vehicle condenser, the second solenoid valve, and the heat exchanger.

**8.** The vehicle air conditioning system according to claim 7, further comprising a fourth solenoid valve, a first end of the fourth solenoid valve being in communication between the second expansion valve and the inlet of the out-vehicle condenser, and a second end of the fourth solenoid valve being in communication between the second solenoid valve and the heat exchanger;
the compressor, the in-vehicle condenser, the second expansion valve, the fourth solenoid valve, and the heat exchanger forming a second passenger compartment heating loop; and
the compressor, the first solenoid valve, the heat conducting component, the first one-way valve, the third expansion valve, the second one-way valve, the fourth solenoid valve, and the heat exchanger forming a second battery pack heat exchange loop.

**9.** The vehicle air conditioning system according to claim 3, further comprising a first expansion valve, a second expansion valve, and a first solenoid valve, the first expansion valve being connected between the outlet of the in-vehicle condenser and the inlet of the out-vehicle condenser, the outlet of the out-vehicle condenser being in communication with the inlet of the heat conducting component through the second expansion valve, and the outlet of the out-vehicle condenser being in communication with the refrigerant inlet of the heat exchanger through the first solenoid valve;
the first passenger compartment heating loop being formed by the compressor, the in-vehicle condenser, the first expansion valve, the out-vehicle condenser, the first solenoid valve, and the heat exchanger; and
the first battery pack heat exchange loop being formed by the compressor, the in-vehicle condenser, the first expansion valve, the out-vehicle condenser, the second expansion valve, and the heat conducting component.

**10.** The vehicle air conditioning system according to claim 9, further comprising an evaporator and a third expansion valve, the outlet of the out-vehicle condenser being in communication with the inlet of the compressor sequentially through the third expansion valve and the evaporator; and
the compressor, the in-vehicle condenser, the first expansion valve, the out-vehicle condenser, the third expansion valve, and the evaporator forming a passenger compartment refrigeration loop.

**11.** The vehicle air conditioning system according to claim 9, further comprising a second solenoid valve, a first end of the second solenoid valve being connected between the inlet of the out-vehicle condenser and the first expansion valve, a second end of the second solenoid valve being connected between an inlet of the heat exchanger and the first solenoid valve; and
the compressor, the in-vehicle condenser, the first expansion valve, the second solenoid valve, and the heat exchanger forming a third passenger compartment heating loop.

**12.** The vehicle air conditioning system according to claim 3, further comprising a liquid collector, an inlet of the liquid collector being in communication with the outlet of the heat conducting component and the refrigerant outlet of the heat exchanger; and an outlet of the liquid collector being in communication with the inlet of the compressor.

**13.** A heat management system, comprising a power battery, a self-heating circuit, and the vehicle air conditioning system according to any one of claims 1 to 12.

**14.** A heat management system, comprising:
one or more heat exchange loops, each heat exchange loop comprising a heat pump device, a heat absorption heat exchanger, and a heat supply heat exchanger which are sequentially connected in series, when a plurality of heat exchange loops are provided, the plurality of heat exchange loops sharing the heat pump device, the heat absorption heat exchanger comprising at least one of an in-vehicle heat exchanger and a battery pack heat exchanger, and the heat exchange loops being used for implementing in-vehicle warming or battery pack heating; and
a valve assembly, configured to implement on/off of each heat exchange loop,
wherein when the heat absorption heat exchanger is the in-vehicle heat exchanger, the heat supply heat exchanger comprises at least one of the battery pack heat exchanger, an out-vehicle heat exchanger, and a motor electric control assembly heat exchanger; when the heat absorption heat exchanger is the battery pack heat exchanger, the heat supply heat exchanger comprises at least one of the out-vehicle heat exchanger and the motor electric control assembly heat exchanger, preferably wherein the heat pump device comprises a gas-liquid separator and a compressor which are connected in series, the compressor is connected close to an input end of the heat absorption heat exchanger, and the gas-liquid separator is connected close to an output end of the heat supply heat exchanger.

**13.** The heat management system according to claim 12, wherein the heat absorption heat exchanger comprises the in-vehicle heat exchanger, the heat supply heat exchanger comprises the battery pack heat exchanger, and the valve assembly comprises a first solenoid valve, a second solenoid valve, and a third solenoid valve, wherein
an output end of the heat pump device is connected to an input end of the in-vehicle heat exchanger by the first solenoid valve, an output end of the in-vehicle heat exchanger is connected to a first end of the battery pack heat exchanger by the second solenoid valve, and a second end of the battery pack heat exchanger is connected to an input end of the heat pump device by the third solenoid valve, wherein the first end of the battery pack heat exchanger is an input end, and the second end of the battery pack heat exchanger is an output end;
or wherein the heat absorption heat exchanger comprises the in-vehicle heat exchanger, the heat supply heat exchanger comprises the out-vehicle heat exchanger, and the valve assembly comprises a first solenoid valve and a fourth solenoid valve, wherein
an output end of the heat pump device is connected to an input end of the in-vehicle heat exchanger by the first solenoid valve, an output end of the in-vehicle heat exchanger is connected to an input end of the out-vehicle heat exchanger by the fourth solenoid valve, and an output end of the out-vehicle heat exchanger is connected to an input end of the heat pump device.

**18.** The heat management system according to claim 14 or 15, wherein the heat absorption heat exchanger comprises the in-vehicle heat exchanger, the heat supply heat exchanger comprises the motor electric control assembly heat exchanger, and the valve assembly comprises a first solenoid valve and a fifth solenoid valve, wherein
an output end of the heat pump device is connected to an input end of the in-vehicle heat exchanger by the first solenoid valve, an output end of the in-vehicle heat exchanger is connected to an input end of the motor electric control assembly heat exchanger by the fifth solenoid valve, and an output end of the motor electric control assembly heat exchanger is connected to an input end of the heat pump device.

**19.** The heat management system according to claim 14 or 15, wherein the heat absorption heat exchanger comprises the battery pack heat exchanger, the heat supply heat exchanger comprises the out-vehicle heat exchanger, and the valve assembly comprises a sixth solenoid valve and a fourth solenoid valve, wherein
an output end of the heat pump device is connected to a second end of the battery pack heat exchanger by the sixth solenoid valve, a first end of the battery pack heat exchanger is connected to an input end of the out-vehicle heat exchanger by the fourth solenoid valve, and an output end of the out-vehicle heat exchanger is connected to an input end of the heat pump device, wherein the first end of the battery pack heat exchanger is an output end, and the second end is an input end.

**20.** The heat management system according to claim 14 or 15, wherein the heat absorption heat exchanger comprises the battery pack heat exchanger, the heat supply heat exchanger comprises the motor electric control assembly heat exchanger, and the valve assembly comprises a sixth solenoid valve and a fifth solenoid valve, wherein
an output end of the heat pump device is connected to a second end of the battery pack heat exchanger by the sixth solenoid valve, a first end of the battery pack heat exchanger is connected to an input end of the motor electric control assembly heat exchanger by the fifth solenoid valve, and an output end of the motor electric control assembly heat exchanger is connected to an input end of the heat pump device, wherein the first end of the battery pack heat exchanger is an output end, and the second end is an input end.

**21.** The heat management system according to any one of claims 16 to 20, wherein the valve assembly comprises the first solenoid valve, the second solenoid valve, the third solenoid valve, the fourth solenoid valve, the fifth solenoid valve, and the sixth solenoid valve, wherein
the output end of the heat pump device is connected to one end of the first solenoid valve to form a first node, the other end of the first solenoid valve is connected to the input end of the in-vehicle heat exchanger, the output end of the in-vehicle heat exchanger is connected to one end of the second solenoid valve to form a second node, the other end of the second solenoid valve is connected to the first end of the battery pack heat exchanger, the second end of the battery pack heat exchanger is connected to one end of the third solenoid valve to form a third node, and the other end of the third solenoid valve is connected to the input end of the heat pump device; and
the second node is further connected to one end of the fourth solenoid valve and one end of the fifth solenoid valve, the other end of the fourth solenoid valve is connected to the input end of the out-vehicle heat exchanger, the output end of the out-vehicle heat exchanger is connected to the input end of the heat pump device, the other end of the fifth solenoid valve is connected to the input end of the motor electric control assembly heat exchanger, the output end of the motor electric control assembly heat exchanger is connected to the input end of the heat pump device, the first node is further connected to one end of the sixth solenoid valve, the other end of the sixth solenoid valve is connected to the third node, and the first end of the battery pack heat exchanger is further connected to the second node.

**22.** The heat management system according to claim 21, wherein the valve assembly further comprises a first one-way valve, a second one-way valve, a third one-way valve, a fourth one-way valve, a fifth one-way valve, and a throttle valve,
wherein the first one-way valve is connected between the first end of the battery pack heat exchanger and the second node, and the first one-way valve points away from the battery pack heat exchanger;
the second one-way valve is connected between the battery pack heat exchanger and the second solenoid valve, and the second one-way valve points to the battery pack heat exchanger;
the third one-way valve is connected between the third solenoid valve and the input end of the heat pump device, and the third one-way valve points to the heat pump device;
the fourth one-way valve is connected between the output end of the out-vehicle heat exchanger and the input end of the heat pump device, and the fourth one-way valve points to the heat pump device; and
the fifth one-way valve is connected between the output end of the motor electric control assembly heat exchanger and the input end of the heat pump device, and the fifth one-way valve points to the heat pump device.

**23.** The heat management system according to claim 22, wherein the valve assembly further comprises the throttle valve, one end of the throttle valve is connected to the first one-way valve and the output end of the in-vehicle heat exchanger, and the other end of the throttle valve is connected to the second node.

**24.** The heat management system according to any one of claims 14 to 20, wherein the battery pack heat exchanger comprises:
a plate heat exchanger, a battery pack liquid-cooling heat exchange plate, and a water pump, the plate heat exchanger having a first flow path and a second flow path, the first flow path being connected to a corresponding heat exchange loop, and the second flow path being connected in series to the battery pack liquid-cooling heat exchange plate and the water pump; or
a battery pack direct-cooling direct-heating heat exchange plate, the battery pack direct-cooling direct-heating heat exchange plate being connected to a corresponding heat exchange loop.

**25.** The heat management system according to claim 19 or 20, further comprising a battery pack self-heating device, the battery pack self-heating device comprising:
a battery pack, the battery pack comprising a first cell group and a second cell group which are connected in series; and
a motor electric control assembly, the motor electric control assembly comprising a motor and a motor controller, positive and negative buses of the motor controller being respectively correspondingly connected to positive and negative electrodes of the battery pack, and ends of three-phase coils of the motor are respectively correspondingly connected to midpoints of three-phase bridge arms of the motor controller, and the other ends of the three-phase coils being all connected to a series connection point between the first cell group and the second cell group.

**26.** A control method for a heat management system, used for the heat management system according to any one of claims 14 to 25, the method comprising:
receiving a heat management instruction; and
controlling the heat management system according to the heat management instruction to implement in-vehicle warming and/or battery pack heating.

**27.** The control method for a heat management system according to claim 26, wherein the controlling the heat management system according to the heat management instruction to implement in-vehicle warming and/or battery pack heating comprises:
controlling the compressor in the heat pump device to be turned on;
if the heat management instruction is an in-vehicle warming instruction, determining a first target heat exchange loop according to an out-vehicle environmental temperature, a motor electric control assembly temperature, and a battery pack temperature, and controlling the first target heat exchange loop to work to implement in-vehicle warming; and
if the heat management instruction is a battery pack heating instruction, determining a second target heat exchange loop according to the out-vehicle environmental temperature, and controlling the second target heat exchange loop to work to implement battery pack heating.

**28.** The control method for a heat management system according to claim 27, wherein the determining a first target heat exchange loop according to an out-vehicle environmental temperature, a motor electric control assembly temperature, and a battery pack temperature comprises:
if the out-vehicle environmental temperature is greater than or equal to a first preset temperature, determining that the first target heat exchange loop is a first heat exchange loop, wherein the first heat exchange loop is a heat exchange loop in which the in-vehicle heat exchanger and the out-vehicle heat exchanger are located; and
if the out-vehicle environmental temperature is less than the first preset temperature, or the out-vehicle environmental temperature is less than a second preset temperature in a working process of the first heat exchange loop, determining the first target heat exchange loop according to the motor electric control assembly temperature and the battery pack temperature, wherein the second preset temperature is less than the first preset temperature.

**29.** The control method for a heat management system according to claim 28, wherein the determining the first target heat exchange loop according to the motor electric control assembly temperature and the battery pack temperature comprises:
if the motor electric control assembly temperature is greater than a third preset temperature, determining that the first target heat exchange loop is a second heat exchange loop, wherein the second heat exchange loop is a heat exchange loop in which the in-vehicle heat exchanger and the motor electric control assembly heat exchanger are located; and
if the motor electric control assembly temperature is less than the third preset temperature, or the motor electric control assembly temperature is less than a fourth preset temperature in a working process of the second heat exchange loop, determining the first target heat exchange loop according to the battery pack temperature, wherein the fourth preset temperature is less than the third preset temperature.

**30.** The control method for a heat management system according to claim 29, wherein the determining the first target heat exchange loop according to the battery pack temperature comprises:
if the battery pack temperature is greater than or equal to a fifth preset temperature, determining that the first target heat exchange loop is a third heat exchange loop, wherein the third heat exchange loop is a heat exchange loop in which the in-vehicle heat exchanger and the battery pack heat exchanger are located; and
if the battery pack temperature is less than the fifth preset temperature, or the battery pack temperature is less than a sixth preset temperature in a working process of the third heat exchange loop, determining that the first target heat exchange loop comprises the second heat exchange loop and the third heat exchange loop, wherein the sixth preset temperature is less than the fifth preset temperature.

**31.** The control method for a heat management system according to claim 30, wherein the heat management system further comprises a battery pack self-heating device, and the method further comprises:
if the battery pack temperature is less than the fifth preset temperature, or the battery pack temperature is less than the sixth preset temperature in the working process of the third heat exchange loop, controlling the battery pack self-heating device to work; and
if the battery pack temperature is less than a seventh preset temperature in a simultaneous working process of the second heat exchange loop and the third heat exchange loop and the motor electric control assembly temperature is greater than or equal to the third preset temperature, controlling all the battery pack self-heating device, the second heat exchange loop, and the third heat exchange loop to stop working, and returning to the step of determining the first target heat exchange loop according to the motor electric control assembly temperature and the battery pack temperature.

**32.** The control method for a heat management system according to claim 27, wherein the determining a second target heat exchange loop according to the out-vehicle environmental temperature comprises:
if the out-vehicle environmental temperature is greater than or equal to an eighth preset temperature, determining that the second target heat exchange loop is a fourth heat exchange loop, wherein the fourth heat exchange loop is a heat exchange loop in which the battery pack heat exchanger and the out-vehicle heat exchanger are located; and
if the out-vehicle environmental temperature is less than the eighth preset temperature, or the out-vehicle environmental temperature is less than a ninth preset temperature in a working process of the fourth heat exchange loop, determining that the second target heat exchange loop is a fifth heat exchange loop, wherein the ninth preset temperature is less than the eighth preset temperature, and the fifth heat exchange loop is a heat exchange loop in which the battery pack heat exchanger and the motor electric control assembly heat exchanger are located.

**33.** The control method for a heat management system according to claim 32, wherein the heat management system further comprises a battery pack self-heating device, and the method further comprises:
if the motor electric control assembly temperature is less than or equal to a tenth preset temperature, or the motor electric control assembly temperature is less than an eleventh preset temperature in a working process of the fifth heat exchange loop, controlling the battery pack self-heating device to work.

**34.** A vehicle, comprising the heat management system according to any one of claims 13 to 25.
